(19) Europäisches Patentamt — European Patent Office — Office européen des brevets

(11) **EP 2 875 384 B1**

## (12) EUROPÄISCHE PATENTSCHRIFT

(45) Veröffentlichungstag und Bekanntmachung des Hinweises auf die Patenterteilung:
**14.03.2018 Patentblatt 2018/11**

(21) Anmeldenummer: **13739635.4**

(22) Anmeldetag: **10.07.2013**

(51) Int Cl.:
*G01S 13/90* (2006.01)

(86) Internationale Anmeldenummer:
**PCT/EP2013/064570**

(87) Internationale Veröffentlichungsnummer:
**WO 2014/012828 (23.01.2014 Gazette 2014/04)**

(54) **METHODE ZUR PROZESSIERUNG VON HOCHAUFLÖSENDEN WELTRAUMGESTÜTZT ERHALTENEN SPOTLIGHT-SAR ROHDATEN**

METHOD FOR PROCESSING HIGH-RESOLUTION SPACEBORNE SPOTLIGHT SAR RAW DATA

PROCÉDÉ DE TRAITEMENT DE DONNÉES BRUTES D'UN RADAR RSO EN MODE DE SAISIE HYPERFINE OBTENUES EN HAUTE RÉSOLUTION ET À PROTECTION SPATIALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2012 DE 102012212743
10.10.2012 US 201261711894 P**

(43) Veröffentlichungstag der Anmeldung:
**27.05.2015 Patentblatt 2015/22**

(73) Patentinhaber: **Deutsches Zentrum für Luft- und Raumfahrt e.V.
51147 Köln (DE)**

(72) Erfinder:
• **PRATS, Pau
82205 Gilching (DE)**
• **SCHEIBER, Rolf
82178 Puchheim (DE)**
• **RODRÍGUEZ-CASSOLÀ, Marc
80636 München (DE)**
• **MITTERMAYER, Josef
81371 München (DE)**

(74) Vertreter: **dompatent von Kreisler Selting Werner - Partnerschaft von Patent- und Rechtsanwälten mbB
Deichmannhaus am Dom
Bahnhofsvorplatz 1
50667 Köln (DE)**

(56) Entgegenhaltungen:
• BREIT H ET AL: "TerraSAR-X SAR Processing and Products", IEEE TRANSACTIONS ON GEOSCIENCE AND REMOTE SENSING, IEEE SERVICE CENTER, PISCATAWAY, NJ, US, Bd. 48, Nr. 2, 1. Februar 2010 (2010-02-01), Seiten 727-740, XP011298503, ISSN: 0196-2892 in der Anmeldung erwähnt
• DAVIDE D'ARIA ET AL: "High-Resolution Spaceborne SAR Focusing by SVD-Stolt", IEEE GEOSCIENCE AND REMOTE SENSING LETTERS, IEEE SERVICE CENTER, NEW YORK, NY, US, Bd. 4, Nr. 4, 1. Oktober 2007 (2007-10-01), Seiten 639-643, XP011192935, ISSN: 1545-598X, DOI: 10.1109/LGRS.2007.903081 in der Anmeldung erwähnt
• HEE-SUB SHIN ET AL: "Omega-K Algorithm for Spaceborne Spotlight SAR Imaging", IEEE GEOSCIENCE AND REMOTE SENSING LETTERS, IEEE SERVICE CENTER, NEW YORK, NY, US, Bd. 9, Nr. 3, 1. Mai 2012 (2012-05-01), Seiten 343-347, XP011433277, ISSN: 1545-598X, DOI: 10.1109/LGRS.2011.2168380 in der Anmeldung erwähnt
• ANGEL RIBALTA: "Time-Domain Reconstruction Algorithms for FMCW-SAR", IEEE GEOSCIENCE AND REMOTE SENSING LETTERS, IEEE SERVICE CENTER, NEW YORK, NY, US, Bd. 8, Nr. 3, 1. Mai 2011 (2011-05-01), Seiten 396-400, XP011354707, ISSN: 1545-598X, DOI: 10.1109/LGRS.2010.2078486 in der Anmeldung erwähnt

EP 2 875 384 B1

- **ANGEL RIBALTA: "High resolution SAR image reconstruction: The generalized backprojection algorithm", GEOSCIENCE AND REMOTE SENSING SYMPOSIUM (IGARSS), 2011 IEEE INTERNATIONAL, IEEE, 24. Juli 2011 (2011-07-24), Seiten 363-365, XP032060945, DOI: 10.1109/IGARSS.2011.6048974 ISBN: 978-1-4577-1003-2 in der Anmeldung erwähnt**

- **MIN-JEONG JO ET AL: "A time-series SAR observation of surface deformation at the southern end of the San Andreas Fault Zone", GEOSCIENCES JOURNAL, Bd. 14, Nr. 3, 1. September 2010 (2010-09-01), Seiten 277-287, XP055079109, ISSN: 1226-4806, DOI: 10.1007/s12303-010-0028-y**

**Beschreibung**

Die Erfindung betrifft ein Verfahren zur Verarbeitung von SAR (Synthetic Aperture Radar)-Rohdaten in exakte Bilddaten, die weltraumgestützt im Spotlight SAR Modus aufgezeichnet werden.

**1. Welche Aufgabenstellung und welches technische Problem liegt der Erfindung zu Grunde, Zweck der Erfindung?**

Im Folgenden wird zunächst eine kurze Einführung zu SAR und Spotlight-Modus eines SAR zum festen und gleitenden (starring bzw. sliding) eines SAR gegeben. Ein Radar mit synthetischer Apertur, abgekürzt SAR (Synthetic Aperture Radar), ist ein Instrument zur Fernerkundung, das in zunehmendem Maße bei der Abbildung, Überwachung und Untersuchung der Erdoberfläche Einsatz findet. Ein derartiges System besteht aus einer Trägerplattform, die sich mit einer konstanten Geschwindigkeit über der Erdoberfläche bewegt, einer Antenne, die in eine Richtung orthogonal zur Bewegungsrichtung, d. h. orthogonal zur Bewegung, blickt, und einem kohärenten Radarsystem, das periodisch mit einer Pulswiederholfrequenz (pulse repetition frequency PRF) Impulse von hochfrequenten elektromagnetischen Wellen aussendet. '

Die Richtung der Trägerplattformbewegung wird als die Azimut-Richtung bezeichnet und die orthogonale Richtung, die schräg nach unten ausgerichtet ist, wird als die Entfernungsrichtung oder auch als Range-Richtung bezeichnet. Im normalen SAR-Betriebsmodus, der als Streifenabbildungsmodus oder auch als Stripmap-Mode bezeichnet wird, wird während des Überflugs über ein zu beobachtendes Gebiet ein Streifen mit der Länge der überflogenen Strecke abgebildet. Die Streifenbreite ist unter anderem von der Länge des Zeitfensters abhängig, in dem die aus den ausgesendeten Impulsen rückgestreuten Radarechos empfangen werden. Die empfangenen Echos werden in der Frequenz umgesetzt (gemischt), demoduliert, digitalisiert und in einem zweidimensionalen Echosignalspeicher als sogenannte Rohdaten abgelegt.

Jede SAR-Verarbeitung umfasst im Wesentlichen eine Entfernungskompression, eine auch als Range-Zellen-Migration bekannte Korrektur der Zielentfernungsvariation und eine Azimutkompression. Die geometrische Auflösung in der Entfernungsrichtung ist eine Funktion der Bandbreite der ausgesendeten Radarimpulse. Zum Verbessern dieser Auflösung werden die gesendeten Impulse vorher moduliert, wofür in den meisten Fällen eine lineare Frequenzmodulation verwendet wird, die auch im Folgenden immer vorausgesetzt wird. Die Entfernungskompression bedeutet eine Filterung der empfangenen Signale in der Entfernungsrichtung entsprechend der Optimalfilter(Matched Filter)-Theorie, wodurch die zeitlich expandierten Signale zu Impulsen komprimiert werden.

Die Zielentfernungsvariation (Range-Migration) ist eine Folge der Änderung der Entfernung zwischen der Antenne und dem Punktziel während der Bildung der synthetischen Apertur. Die Korrektur der Range-Migration korrigiert die Entfernungsvariation der zu einem Punktziel gehörenden Echos im zweidimensionalen Rohdaten-Echospeicher.

Die Pulskompression in der Azimutrichtung gemäß der Optimalfilter-Theorie entspricht der Bildung der synthetischen Apertur. Die Azimutmodulation ist ebenso eine Folge der Entfernungsvariation zwischen der Antenne und dem Ziel beim Vorbeiflug der Trägerplattform. Die Optimalfilterung bedeutet eine kohärente Aufsummierung aller Echos, die zu einer Azimutposition gehören. Wenn die Zielentfernungsvariation vor der Azimutkompression korrigiert wird, kann die Azimutkompression durch eine eindimensionale Filterfunktion verwirklicht werden.

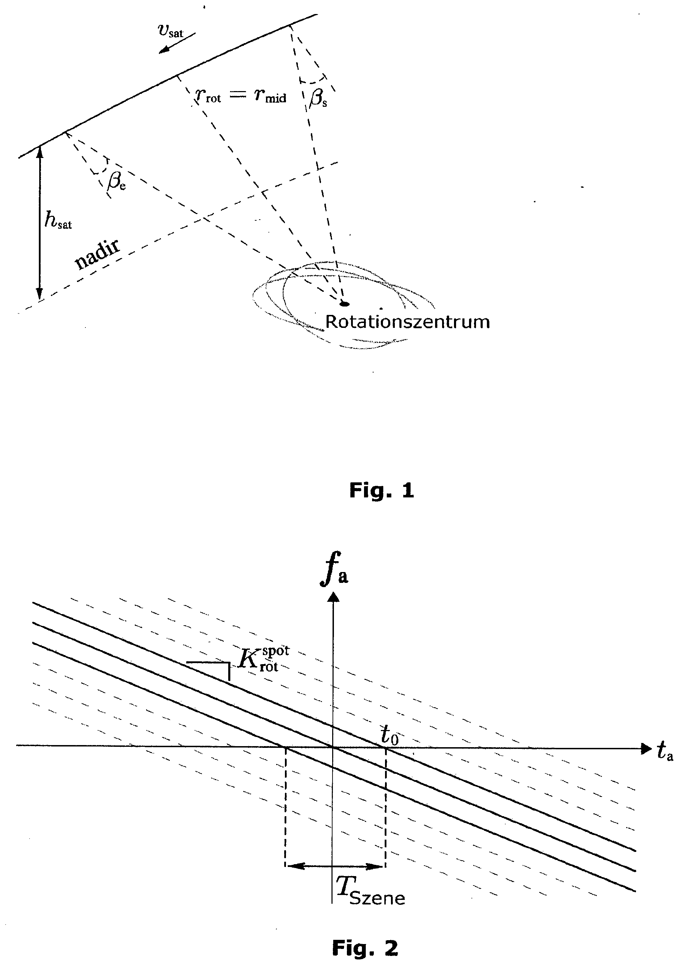

Festes (starring) Spotlight-SAR und gleitendes (sliding) Spotlight-SAR sind Betriebsarten von SAR-Systemen, die eine signifikant höhere geometrische Auflösung erlauben. Im Spotlight-Modus wird die Antenne während des gesamten Vorbeiflugs so gesteuert, dass sie eine gleiche Szenenfläche (Fleck; spot) beleuchtet, im Azimut also entsprechend gedreht wird wie in Fig. 1 gezeigt. Dadurch kann die Azimutauflösung im Vergleich zum gewöhnlichen Streifenabbildungsmodus verbessert werden. Die beobachteten Szenenabmessungen werden allerdings drastisch reduziert. Im gleitenden Spotlight-Modus ist das Rotationszentrum nicht im Zentrum der Antenne sondern weiter weg von der beleuchteten Szene, so dass ein größerer Azimutbereich als im Spotlight-Fall abgedeckt werden kann.

Für das Spotlight-Rohdatensignal ist die Szenenbandbreite größer als die Pulswiederholfrequenz PRF der Datenaufzeichnung. Die Eigenschaften des SAR Signals können in einem Zeit-Frequenz-Diagramm dargestellt werden. Fig. 2 zeigt die Doppler-Frequenz von drei Punktzielen bei gleicher Schrägentfernung (fette Linie). Die Abszisse entspricht der Azimutzeit und die Ordinate der instantanen Frequenz. Da jeweils die gleiche Szenenfläche beleuchtet wird, werden alle Ziele über die gesamte Zeitdauer beobachtet. Dies hat zur Folge, dass die Szenenbandbreite mehrere PRF-Intervalle umfasst. Somit sind Verfahren notwendig, die diese Unterabtastung des Azimutsignals berücksichtigen. Die Azimutverarbeitung benötigt somit besondere Aufmerksamkeit, da der konventionelle Optimalfilter in Azimutrichtung ein Auffüllen mit Nullen (zero-padding) im Azimutfrequenzbereich erfordert, um der großen Szenenbandbreite zu genügen.

Konventionelle Methoden zur Prozessierung weltraumgestützter Spotlight-SAR Daten existieren in der Literatur und arbeiten erfolgreich bis zu einer bestimmten Azimutbeobachtungsdauer. Mit zunehmender Dauer verbessert sich die Auflösung, andere Effekte jedoch nehmen an Bedeutung zu und müssen berücksichtigt werden. Einige davon sind bekannt und wurden für derzeitige Spotlight-SAR Systeme bislang vernachlässigt oder nur näherungsweise berücksichtigt, andere wiederum sind in der Literatur noch nicht beschrieben.

Ein erster zu berücksichtigende Effekt ist die Krümmung des Orbits. Für lange Beobachtungszeiten ist die Phasenhistorie des Azimutsignals nicht mehr rein hyperbolisch, wie von den meisten Prozessierungsalgorithmen angenommen. Es wird somit eine Korrektur benötigt, um Defokussierung und Phasenfehler zu vermeiden.

Ein zweiter Effekt betrifft die Bewegung der Plattform während des Sendens des Chirpsignals. Obwohl die Dauer dieses Sendesignals im Bereich weniger Zehn Mikrosekunden liegt, bewegt sich die Plattform einige Zentimeter. Wird keine Korrektur angewandt, um diese Bewegung zu berücksichtigen, sind Phasenfehler und eine Auflösungsverschlechterung in beide Raumrichtungen (Entfernung und Azimut) die Folge. Ist der Effekt vernachlässigbar, spricht man von der sogenannten Start-Stopp-Approximation. Dabei wird angenommen, dass sich die Plattform während des Sendens und des Empfangs des Signals nicht bewegt. In der Literatur wird die Start-Stopp-(oder Stop-and-Go-)Approximation auch für den Fall verwendet, dass der Satellit sich zwischen dem Senden des Pulses und dem Empfang des Echos bewegt, was für weltraumgestützte Sensoren einer Strecke von einigen zehn Metern entspricht (*slow time* Start-Stopp Approximation). Dieser Effekt entspricht lediglich einer Verschiebung in Azimutrichtung, die zwar eine Entfernungsabhängigkeit aufweist, aber leicht korrigiert werden kann. Der Effekt ist damit harmlos und unterschiedlich zu dem hier beschriebenen Effekt, der die Bewegung der Antenne während des Sendens und Empfangs der Signale berücksichtigt. Um die zwei Effekte klar zu unterscheiden, wird letzterer als fast-time Start-Stopp-Effekt bezeichnet.

Schließlich wird ein dritter Effekt durch die Troposphäre verursacht. Diese bedingt eine zusätzliche Verzögerung und Phasendrehung des Signals, die wegen der sich ändernden Beobachtungsgeometrie innerhalb der synthetischen Apertur variiert und Defokussierung und Phasenfehler verursacht, sofern sie nicht korrigiert werden.

## 2. Stand der Technik

Keine der derzeit bekannten Methoden zur Prozessierung von Spotlight-SAR Daten berücksichtigt alle beschriebenen Probleme um perfekte Fokussierung und die gewünschte Auflösung zu erreichen. So wird bei sämtlichen in EP-B-0 795 762, US-B-6,222,933, EP-B-0 924 534, EP-B-2 167 989 und [R1] beschriebenen Prozessoren eine rein hyperbolische Phasenhistorie angenommen und die Krümmung des Orbits sowie die anderen oben beschriebenen Effekte vernachlässigt.

Es gibt allerdings einige Publikationen, die sich des Problems des gekrümmten Orbits annehmen. Die Arbeit [R2] berechnet numerisch einen Prozessierungskern, der die SAR Verarbeitung entsprechend einer L2 Normierung optimiert. Das Verfahren in [R3] ist eine weitere Möglichkeit zur Handhabung des gekrümmten Orbits. Während [R3] das Problem der "slow time" Start-Stopp Approximation anspricht, gibt es derzeit kein Verfahren, das die "fast time" Start-Stopp Eigenschaft berücksichtigt und auch keines für die Troposphäre.

Der "fast-time" Start-Stop Effekt ist wohlbekannt in FMCW-Sensoren (frequency modulation continuous wave) und verschiedene Kompensationsverfahren existieren in der Literatur [R4]. Die "slow-time" Start-Stopp Approximation wird in [R1] für weltraumgestützte Systeme analysiert.

Schließlich werden die Troposphäreneffekte auch in [R1] behandelt, sie werden jedoch lediglich auf eine konstante Verschiebung des SAR Bildes in Entfernungsrichtung approximiert. Die Variation der Troposphäre innerhalb der synthetischen Apertur wird außer Acht gelassen und in keiner Publikation behandelt.

Die Methode zur genauen Fokussierung weltraumgestützter, hochauflösender Spotlight-SAR-Rohdaten wird in Zusammenhang mit dem Extended Chirp Scaling (ECS) Algorithmus beschrieben, und zwar in dessen für Spotlight Daten adaptierter Form. Diese nutzt Subaperturen um die große Szenenbandbreite zu berücksichtigen (siehe US-B-6,222,933 und EP-B-0 924 534), sowie ein Azimuth Scaling und SPECAN Verfahren für die Azimutprozessierung (siehe EP-B-0 795 762). Es wird angemerkt, dass auch andere Prozessierungskerne genutzt werden können, z. B. der range-Doppler Algorithmus oder der Wellenzahl-Algorithmus (omega-k), oder jene basierend auf der chirp-Z Transfromation. Ebenso kann für die Prozessierung von Daten im gleitenden Spotlight Modus die Azimuthverarbeitung mit Hilfe von Baseband-Azimut-Scaling durchgeführt werden [R4] (siehe EP-B-2 167 989).

## 3. Nachteile des Standes der Technik

Keine der dem Stand der Technik entsprechenden Methoden berücksichtigt also die relevanten Effekte für hochauflösende Spotlight-SAR Daten.

Die in der Literatur aufgeführten Methoden zur Prozessierung von Spotlight SAR Daten nehmen eine hyperbolische Phasenhistorie an und vernachlässigen die anderen Effekte (siehe US-B-6,222,933 und EP-B-0 924 534). In [R2] ist zwar ein Verfahren beschrieben, um den gekrümmten Orbit zu berücksichtigen; dieses Verfahren verwendet aber eine numerischen Auswertung und eine Invertierung aus Singulärwertzerlegung (SVD - Singular Value Decomposition). In [R3] wird eine andere Methode basierend auf einer Linearisierung des gekrümmten Pfades beschrieben. Keines dieser Verfahren ist geradlinig und beide vernachlässigen die Azimutvarianz der Impulsfunktion (IRF - impulse response function), die ihrerseits vom gekrümmten Orbit abhängt. Werden diese Methoden genutzt, könnten Azimutdefokussierung und Phasenfehler für Ziele abseits der Referenzposition die Folge sein, speziell im Falle von langen Beobachtungszeiten und der damit einhergehenden Azimutvarianz der Orbitkrümmung bzw. IRF.

Der "fast-time" Start-Stopp Effekt wurde in einigen Publikationen behandelt [R4]. In [R4] wird eine Lösung für FMCW Radare beschrieben, jedoch wird in dem vorliegenden Fall eine Lösung für ein gepulstes Radarsystem benötigt. In [R5] wird zwar eine Lösung für ein gepulstes Radar beschrieben, allerdings in Zusammenhang mit einer Zeitbereichsprozessierung, die sehr rechenintensiv und somit ineffizient ist. Die hier vorgestellte Lösung wird im Rahmen eines effizienten FFTbasierten Prozessors vorgeschlagen.

Bzgl. der Troposphäre wird in [R1] lediglich eine konstante Verschiebung berücksichtigt, wobei die Variation innerhalb der synthetischen Apertur vernachlässigt wird.

## 4. Gegenstand und Zusammenfassung der Erfindung

Aufgabe der vorliegenden Erfindung ist es, die Unzulänglichkeiten der Stand-der-Technik-Verfahren zur Prozessierung von Spotlight SAR Rohdaten zu lösen. Das primäre Ziel der Erfindung ist eine genaue und effiziente Methode zur Prozessierung weltraumgestützter Spotlight SAR Rohdaten.

Zur Lösung dieser Aufgabe wird mit der Erfindung ein Verfahren zur Verarbeitung von hochauflösenden Spotlight SAR Rohdaten vorgeschlagen, das erfindungsgemäß gekennzeichnet ist durch

- eine Anpassung der Entfernungshistorie an einen für die effiziente SAR Verarbeitung geeigneten hyperbolischen Verlauf unter Berücksichtigung

    - einer Funktion zur geometrischen Korrektur unter numerischer Einbeziehung des real gemessenen Orbitverlaufs unter Verwendung einer Azimut abhängigen Phasenkorrektur (z. B. entsprechend den Schritten **3.3 und 3.4**) und
    - einer Funktion zur Korrektur von konstanten und innerhalb der Beleuchtungszeit variablen Laufzeiteffekten in der Troposphäre unter Verwendung einer ebenfalls Azimut abhängigen Phasenkorrektur (z. B. entsprechend den Schritten **3.5 und 3.6**).

In vorteilhafter Ausgestaltung der Erfindung kann eine Kompensation der während des Sendens und des Empfangs der frequenzmodulierten Radarpulse erfolgenden, relativen Bewegung des Sensors zum Ziel (z. B. entsprechend den Schritten **3.8 und 3.9**). Es sei an dieser Stelle erwähnt, dass die hier beschriebenen Verfahrensschritte auch ohne die Verfahrensschritte gemäß Anspruch 1 ausgeführt werden können.

Vorteilhaft ist es, wenn ein Chirp-Scaling basiertes Verfahren, ggf. mit einem SPECAN Verfahren kombiniert, verwendet wird, wobei eine Kompensation der Taylor-Approximation 2-ten Grades des 2D-Frequenzspektrums (z. B. entsprechend den Schritten **3.10 und 3.11**) erfolgt. Es sei an dieser Stelle erwähnt, dass diese Variante des erfindungsgemäßen Verfahrens auch unabhängig von den Verfahrensschritten des Anspruchs 1 und/oder des Anspruchs 2 durchgeführt werden kann.

In weiterer vorteilhafter Ausgestaltung der Erfindung kann eine zusätzliche geometrische und/oder signallaufzeitbedingte Kompensation für die Erweiterung des Gültigkeitsbereichs der geometrischen Korrektur von einer Linie in Entfernungsmitte auf ein ausgedehntes Gebiet (z. B. entsprechend den Schritten **3.21-3.24**) vorgesehen sein. Es sei an dieser Stelle erwähnt, dass die hier beschriebenen Verfahrensschritte auch ohne die Verfahrensschritte gemäß einem der Ansprüche 1 bis 3 ausgeführt werden können.

In weiterer vorteilhafter Ausgestaltung der Erfindung kann vorgesehen sein, dass die folgenden sequentiell zu verarbeitenden Schritte durchgeführt werden:

Transformieren der im Zeitbereich vorliegenden Subaperturdaten in den Entfernungsfrequenzbereich mittels FFT in Entfernungsrichtung (siehe Schritt **3.2**);

Multiplizieren der zweidimensionalen Daten mit einer Phasenfunktion $H_{OCO,1}(t, f_r; r_{ref})$, die durch

$$H_{OCO,1}\left(t, f_r; r_{ref}\right) = \exp\left[ j\frac{4\pi}{c} \cdot \left(f_0 + f_r\right) \cdot \Delta r_{residual}\left(t; r_{ref}\right) \right], \qquad (1)$$

gegeben ist, wobei $t$ die Azimutzeit, c die Lichtgeschwindigkeit, $f_r$ den Entfernungsfrequenzvektor, $f_0$ die Mittenfrequenz und $\Delta r_{residual}(t; r_{ref})$ die Differenz zwischen tatsächlicher Entferningshistorie und deren hyperbolischer Approximation für eine Referenzentfernung bezeichnen, letztere beschrieben durch

$$\Delta r_{residual}\left(t; r_{ref}\right) = \left|\vec{p}_{SAT}\left(t\right) - \vec{p}_{bc}\left(t\right)\right| - \sqrt{r_{ref}^2 - v_{eff,bc}^2\left(t\right) \cdot \left(t - t_0\right)^2} \, , \qquad (2)$$

wobei $\bar{p}_{SAT}(t)$ die Satellitenposition als Funktion der Zeit in einem erdzentrierten erdfesten Koordinatensystem (ECEF - Earth-centered-Earth-fixed coordinates) bezeichnet und $\bar{p}_{bc}(t)$ die Position des Referenzpunktes in der Mitte der Antennenkeule für jeden Azimutzeitpunkt $t$, ebenfalls in ECEF Koordinaten. $v_{eff,bc}$ ist die effektive Geschwindigkeit für den Referenzpunkt zum Azimutzeitpunkt t und $t_0$ ist die sogenannte zero-Doppler Zeit des Ziels, wobei beide numerisch aus den Statevektoren des Orbits und den Zielkoordinaten errechnet werden (siehe Schritte **3.3** und **3.4**);

Multiplizieren der zweidimensionalen Daten mit einer Phasenfunktion $H_{troposphere}(t,f_r;r_{ref})$, gegeben durch

$$H_{troposphere}\left(t,f_r;r_{ref}\right)=\exp\left[j\frac{4\pi}{c}\cdot\left(f_0+f_r\right)\cdot\Delta r_{troposphere}\left(t;r_{ref}\right)\right], \qquad (3)$$

wobei $\Delta r_{troposphere}(t;r_{ref})$ eine azimutabhängige, durch die Troposphäre verursachte Verzögerung des Signals im Ausbreitungspfad bezeichnet, die näherungsweise mit

$$\Delta r_{troposphere}\left(t;r_{ref}\right)=\frac{Z\cdot\exp\left[-h\left(r_{ref}\right)\big/H\right]}{\cos\theta\left(r_{ref}\right)\cos\alpha\left(t;r_{ref}\right)}, \qquad (4)$$

berechnet werden kann, wobei Z die Verzögerung des Signals im Zenit in Meter, $H$ die Troposphärendicke, $h(r_{ref})$ die Höhe des Ziels, $\theta$ den Blickwinkel (off-nadir) und a den Azimutwinkel während der synthetischen Apertur bezeichnen, der wiederum numerisch aus den Orbitdaten und dem Referenzpunkt in der Mitte der Antennenkeule zu jedem Azimutzeitpunkt t ermittelt wird. Z und $H$ sind Modellparameter deren Werte mit 2.3 m und 6 km für jeden Punkt auf der Erde relativ gut approximiert werden können, wobei aber auch genauere Werte oder andere Modelle genutzt werden können, sofern vorhanden (siehe Schritte **3.5** und **3.6**);

Transformieren der Subaperturdaten mittels kurzer Azimut FFTs in den zweidimensionalen Frequenzbereich (siehe Schritt **3.7**);

Mutliplizieren der zweidimensionalen Daten mit einer Phasenfunktion $H_{ss}(f_a,f_r)$ gegeben durch

$$H_{ss}\left(f_a,f_r\right)=\exp\left[j\cdot2\pi\cdot f_a\cdot\tau_{ss}\left(f_r\right)\right], \qquad (5)$$

wobei $\tau_{ss}$ die entfernungsfrequenzabhängige Azimutverschiebung bezeichnet:

$$\tau_{ss}\left(f_r\right)=\left(f_r+\frac{B_r}{2}\right)\frac{\tau_p}{B_r}, \qquad (6)$$

mit $\tau_p$ gleich der Pulsdauer (Chirp), $B_r$ gleich der Chirpbandbreite und $f_r$ der Entfernungsfrequenzvektor gegeben durch:

$$f_r\in\left[-\frac{f_s}{2},\frac{f_s}{2}\right], \qquad (7)$$

mit $f_s$ als Abtastfrequenz in Entfernungsrichtung. Für einen "down-chirp" muss der gespiegelte Vektor von (8) genutzt werden (siehe Schritte **3.8** und **3.9**), d.h. $\tau_{ss,down\text{-}chirp}(f_r)=\tau_{ss,up\text{-}chirp}(-f_r)$.

Im Falle der Verwendung eines Prozessierungskerns basierend auf Chirp Scaling (z. B. Extended Chirp Scaling ECS) für die entfernungsvariante Verarbeitung bieten sich bei einer bevorzugten Ausgestaltung der Erfindung folgende zusätzliche Verfahrensschritte an:

Multiplizieren der zweidimensionalen Daten mit einer Phasenfunktion $H_{\Delta ECS}(f_a,f_r)$ gegeben durch

$$H_{\Delta ECS}\left(f_a,f_r\right)=\exp\left[j\cdot\phi_{\Delta ECS}\right], \qquad (8)$$

mit

$$\phi_{\Delta ECS} = \frac{4\pi}{\lambda} r_{ref} \sqrt{\left(1+\frac{f_r}{f_0}\right)^2 - \left(\frac{\lambda f_a}{2v_{eff}}\right)^2} + \left(\phi_0(f_a) + \phi_1(f_a)\cdot f_r + \phi_2(f_a)\cdot f_r^2\right), \qquad (9)$$

wobei der zweite Summand in Gleichung (9) der Taylorreihe des Signals bis zum quadratischen Glied in der Entfernungsfrequenz entspricht, wie sie zur Ableitung des Chirp Scaling Verfahrens (und implizit auch ECS) genutzt wurde (siehe Schritte **3.10** und **3.11**). Die Koeffizienten sind:

$$\phi_0(f_a) = -\frac{4\pi}{\lambda} r_{ref}\, \beta(f_a), \qquad (10)$$

$$\phi_1(f_a) = -\frac{4\pi}{c} \frac{r_{ref}}{\beta(f_a)}, \qquad (11)$$

$$\phi_2(f_a) = -\frac{2\pi}{c^2} \frac{\lambda r_{ref}\cdot\left(\beta^2(f_a)-1\right)}{\beta^3(f_a)}, \qquad (12)$$

wobei für den Azimutmodulationsterm gilt:

$$\beta(f_a) = \sqrt{1-\left(\frac{\lambda f_a}{2v_{eff}}\right)^2}\;; \qquad (13)$$

Transformieren der Subaperturdaten zurück in den Azimutfrequenzbereich mittels einer inversen FFT in Entfernungsrichtung (siehe Schritt **3.12**).

Unter der Annahme, dass die entfernungsvariante Prozessierung bereits durchgeführt wurde und die Daten im entfernungszeit-Azimutfrequenzbereich vorliegen, kann bei einer weiteren vorteilhaften Ausgestaltung der Erfindung mit den nachfolgenden Verfahrensschritten fortgefahren werden:

Transformieren der Subapertur zurück in den Azimutzeitbereich mittels kurzer inverser Azimut-FFT (siehe Schritt **3.21**);

Multiplizieren der zweidimensionalen Daten mit einer Phasenfunktion $H_{OCO,2}(t,\tau)$ gegeben durch

$$H_{OCO,2}(t,\tau) = \exp\left[j\frac{4\pi}{\lambda}\cdot\left(\Delta r_{residual}(t;r) - \Delta r_{residual}(t;r_{ref})\right)\right], \qquad (14)$$

wobei $\Delta r_{residual}(t;r)$ numerisch berechnet werden muss (siehe Schritte **3.22** und **3.23**).

Transformieren der Subaperturdaten zurück in den Azimutfrequenzbereich mittels kurzer Azimut-FFT (siehe Schritt **3.24**);

In Ergänzung der zuvor genannten Verarbeitungsschritte kann bei Prozessierung der Spotlight SAR-Rohdaten mit einem Chirp Scaling Verfahren und einer SPECAN Methode zusätzlich vorgesehen sein, die folgenden Schritte sequentiell auszuführen:

Aufteilung der Spotlight SAR Rohdaten in Azimut-Subaperturen (siehe Schritt **3.1**);

Sequentielle Verarbeitung nach Schritt **3.2** bis **3.12**;

Multiplizieren des Signals mit der Chirp Scaling Funktion $H_{cs}$ (siehe Schritte **3.13** und **3.14**), gegeben durch

$$H_{cs}\left(f_a,\tau;r_0\right) = \exp\left[-j\cdot\pi\cdot K_{eff}\left(f_a;r_{ref}\right)\cdot a(f_a)\cdot\left(\tau - \tau_{ref}\left(f_a\right)\right)\right]; \qquad (15)$$

Transformieren des Signals in den zweidimensionalen Frequenzbereich mittels FFT in Entfernungsrichtung (siehe Schritt **3.15**);

Multiplizieren des Signals mit der Phasenfunktion $H_{rcmc}$ (siehe Schritte **3.16** und **3.17**) gegeben durch

$$H_{rcmc}\left(f_a,f_r;r_{ref}\right) = \exp\left[-j\frac{\pi}{K_{eff}\left(f_a;r_{ref}\right)\cdot\left(1+a(f_a)\right)}f_r^2\right]\cdot\exp\left[j\frac{4\cdot\pi}{c}\cdot r_{ref}\cdot a(f_a)\cdot f_r\right] \quad (16)$$

Um die Korrektur der Entfernungsvariation, die Entfernungskompression und die Entfernungskompression zweiter Ordnung durchzuführen;

Transformieren des Signals in den Entfernungszeit-Azimutfrequenzbereich mittels inverser FFT in Entfernungsrichtung (siehe Schritt **3.18**);

Multiplizieren des Signals mit einer Phasenkorrekturfunktion $H_{corr}$ (siehe Schritte **3.19** und **3.20**) gegeben durch

$$H_{corr}\left(f_a;r_0\right) = \exp\left[j\cdot\pi\cdot K_{eff}\left(f_a;r_{ref}\right)\cdot\left(1+a(f_a)\right)\cdot a(f_a)\cdot\left(\frac{2}{c}\cdot\left(r_0 - r_{ref}\right)\right)^2\right]; \qquad (17)$$

Sequentielle Weiterführung der Verarbeitung nach Schritt **3.21** bis **3.24**;

Multiplizieren der zweidimensionalen Daten mit einer Phasenfunktion $H_{specan,1}(f_a;r_0)$ (siehe Schritte **3.25** und **3.26**) gegeben durch

$$H_{specan,1}(f_a;r_0) = \exp\left[j\cdot\frac{4\cdot\pi}{\lambda}\cdot r_0\cdot\left(\beta(f_a)-1\right)\right]\cdot\exp\left[-j\cdot\frac{\pi}{K_{scl}}\cdot f_a^2\right]; \qquad (18)$$

Transformieren der Subaperturdaten in den Azimutzeitbereich mittels kurzer inverser Azimut-FFT (siehe Schritt **3.27**);

Multiplizieren der zweidimensionalen Daten mit einer Phasenfunktion $H_{pecan,2}(f_a;r_0)$ (siehe Schritte **3.28** und **3.29**) gegeben durch

$$H_{specan,2}(t) = \exp\left[-j\cdot\pi K_{scl}\cdot t^2\right]; \qquad (19)$$

Zusammensetzen der Azimutsubaperturen (siehe Schritt **3.30**);

Multiplizieren der zweidimensionalen Daten mit einer Funktion zur Nebenzipfelunterdrückung in Azimutrichtung (siehe Schritte **3.31** und **3.32**);

Transformieren der zweidimensionalen Daten in den Frequenzbereich mittels langer Azimut-FFT (siehe Schritt **3.33**);

Multiplizieren der zweidimensionalen Daten mit einer Funktion zur Korrektur des Azimutantennendiagramms (siehe Schritte **3.34** und **3.35**);

Multiplizieren der zweidimensionalen Daten mit einer Phasenfunktion $H_{specan,3}(f_a)$ (siehe Schritte **3.36** und **3.37**) gegeben durch

$$H_{specan,3}\left(f_a\right) = \exp\left[-j\cdot\pi\cdot\frac{f_a^2}{K_{scl}}\right]. \qquad\qquad (20)$$

Die Nutzung des erfindungsgemäßen Verfahrens nach einem der Ansprüche 5 bis 7 eignet sich auch für die zweidimensionale Verarbeitung weltraumgestützter SAR Rohdaten in den Aufzeichnungsmodi Stripmap, ScanSAR und TOPS.

Bei dem Verfahren nach der Erfindung wird eine Subapertur-Verarbeitung ausgeführt, um Azimut-Aliasing zu vermeiden, wie in US 6,222,933 B1 sowie EP 0 924 534 B1 ausgeführt. Somit kann eine geringere PRF genutzt werden, da das Abtasttheorem nur innerhalb der Subapertur in Azimutrichtung gewährleistet werden muss. Innerhalb jeder Subapertur werden mehrere Schritte dem konventionellen Prozessierungsablauf hinzugefügt um die vorab beschriebenen relevanten Effekte zu berücksichtigen.

Gemäß der vorliegenden Erfindung wird der gekrümmte Orbit mittels einer Phasenkorrektur und einer Verschiebung des Signals in Entfernungsrichtung berücksichtigt. Die Korrektur ist azimutabhängig und wird z. B. numerisch aus der Geometrie der Datenaufzeichnung für einen Punkt in Szenenmitte berechnet. Dieser Schritt wird als "Orbitkompensation erster Ordnung" bezeichnet und für eine Referenzentfernung ausgeführt. Innerhalb des gleichen Prozessierungsschrittes kann auch eine azimuthabhängige Phasenkorrektur und Verschiebung zur Berücksichtigung der Verzögerung in der Troposphäre erfolgen. In den meisten Fällen genügt es, ein Troposphärenmodell zur Berechnung der Verzögerung zu benutzen, wie z. B. in [R1] gezeigt, wobei im vorliegenden Fall die Azimutabhängigkeit zusätzlich in das Modell aufgenommen wurde. Da diese beiden Verfahren im Azimutzeitbereich ausgeführt werden und die Antennenkeule für weltraumgestützte Systeme üblicherweise sehr schmal ist, wird implizit die Azimutvarianz der Impulsfunktion IRF berücksichtigt, was zu einer besseren Lösung verglichen zu [R2] und [R3] führt.

Danach kann, falsch gewünscht, die Korrektur der Start-Stopp-Approximation effizient als Phasenmultiplikation auf das Signal im zweidimensionalen Frequenzbereich durchgeführt werden.

Nach diesen drei Korrekturen wird die Subaperturverarbeitung wie üblich fortgesetzt, wobei jeder für Stripmap SAR Daten entwickelte Prozessierungskern geeignet ist, um die Schritte Entfernungskompression, Korrektur der Zielentfernungsänderung und sekundäre Entfernungskompression auszuführen. Im beschriebenen Ausführungsbeispiel wird der Extended Chirp Scaling (ECS) Algorithmus genutzt, da er eine SAR Verarbeitung ohne Interpolationen erlaubt und damit gleichermaßen effizient und genau ist. Da jedoch beim ECS der Abbruch im zweidimensionalen Frequenzbereich nach dem Glied zweiter Ordnung erfolgt, muss eine weitere Korrektur erfolgen, entsprechend einer einfachen Phasenfunktion. Schließlich könnte der Bedarf einer "Orbitkompensation zweiter Ordnung" bestehen, was wiederum einer Phasenkorrektur entspricht, da diejenige erster Ordnung lediglich für eine Referenzentfernung exakt gültig war. Danach erfolgt die Verarbeitung in Azimut mittels Azimut Scaling und SPECAN wie in EP 0 795 762 B1, US 6,222,933 B1 sowie EP 0 924 534 B1 beschrieben, wonach das fokussierte Bild resultiert.

Insgesamt werden auf diese Art die folgenden Vorteile mit dem Verfahren nach der Erfindung erreicht:

- Der gekrümmte Orbit wird effizient und angemessen für eine Referenzentfernung berücksichtigt, so dass konventionelle Algorithmen, die eine hyperbolische Phasenhistorie annehmen, weiterhin genutzt werden können. Die vorgeschlagene Methode berücksichtigt die Azimutvarianz der Korrektur.
- Der Einfluss der Troposphäre wird effizient und angemessen berücksichtigt und korrigiert. Die vorgeschlagene Methode berücksichtigt auch die Azimutvarianz der Korrektur innerhalb der synthetischen Apertur.
- Die "fast-time" Start-Stopp-Approximation wird effizient und angemessen berücksichtigt und korrigiert.
- Die drei oben beschriebenen Korrekturen werden als Vorverarbeitungsschritte durchgeführt, so dass jedwelcher Kern für die entfernungsvariante SAR-Prozessierung genutzt werden kann, sei es ECS, range-Doppler, omega-k, chirp-Z transform, usw.
- Eine Orbitkompensation zweiter Ordnung wird durchgeführt um eine entfernungsabhängige Korrektur des gekrümmten Orbits und der Troposphäre zu ermöglichen. Wegen der großen Entfernung zwischen Sensor und Szene wird dieser Schritt bei derzeitigen weltraumgestützten Sensoren in der Regel nicht benötigt.

**5. Detaillierte Beschreibung eines bevorzugten Ausführungsbeispiels**

Nachfolgend wird unter Bezugnahme auf die Zeichnung ein Ausführungsbeispiel der Erfindung näher erläutert. Im Einzelnen zeigen dabei:

Fig. 1 schematisch die grundsätzlich geltende Aufnahmegeometrie für Spotlight SAR,

Fig. 2 das Zeit-Frequenz Diagramm für den Spotlight-Modus,

Figuren 3a und 3b
das Flussdiagramm eines Ausführungsbeispiels des erfindungsgemäßen Verfahrens,

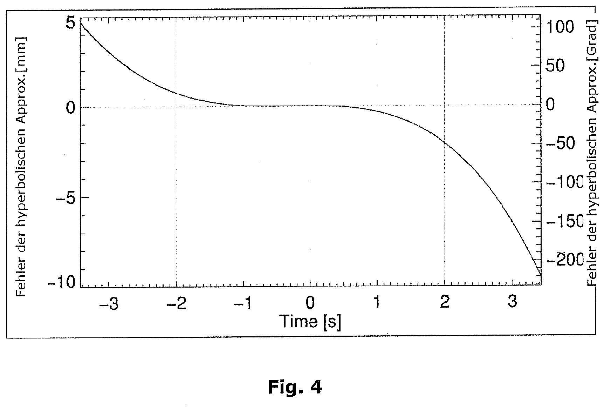

Fig. 4 in Form eines Diagramms den Fehler der hyperbolischen Approximation, nummerisch berechnet für ein Ziel in Szenenmitte,

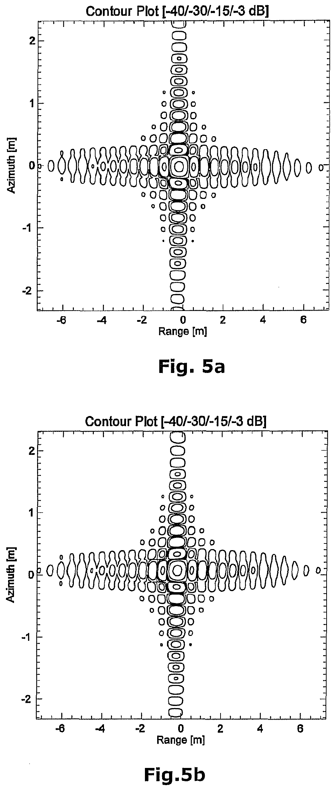

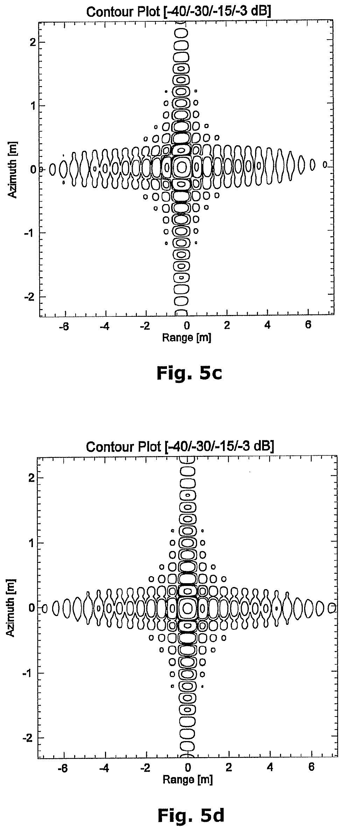

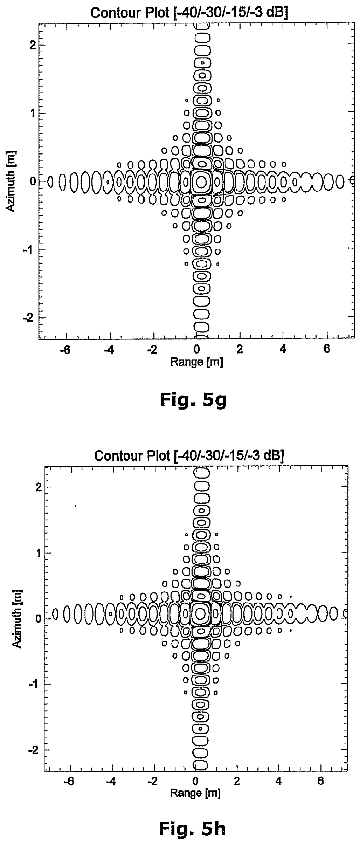

Figuren 5a bis 5i
Konturdiagramme für die Prozessierungsergebnisse von neun simulierten Zielen, und zwar in Fign. 5a bis 5c im Nahbereich, in Fign. 5d bis 5f in Entfernungsmitte und in Fign. 5g bis 5i im Fernbereich,

Figuren 6a bis 6e
Konturdiagramme für die Prozessierungsergebnisse von fünf Reflektoren, aufgezeichnet von TerraSAR-X, wobei keine erfindungsgemäßen Verbesserungen vorgenommen wurden, so dass die Defokussierungseffekte in Azimut- und Entfernungsdimension offensichtlich sind, und

Figuren 7a bis 7e
Konturdiagramme für die Prozessierungsergebnisse von fünf Reflektoren, aufgezeichnet von TerraSAR-X und prozessiert nach dem erfindungsgemäßen Verfahren, wobei sich die Reflektoren in Entfernungsmitte befinden, und zwar mit Ausnahme des ersten Reflektors, der in einer Ecke im Nahbereich liegt.

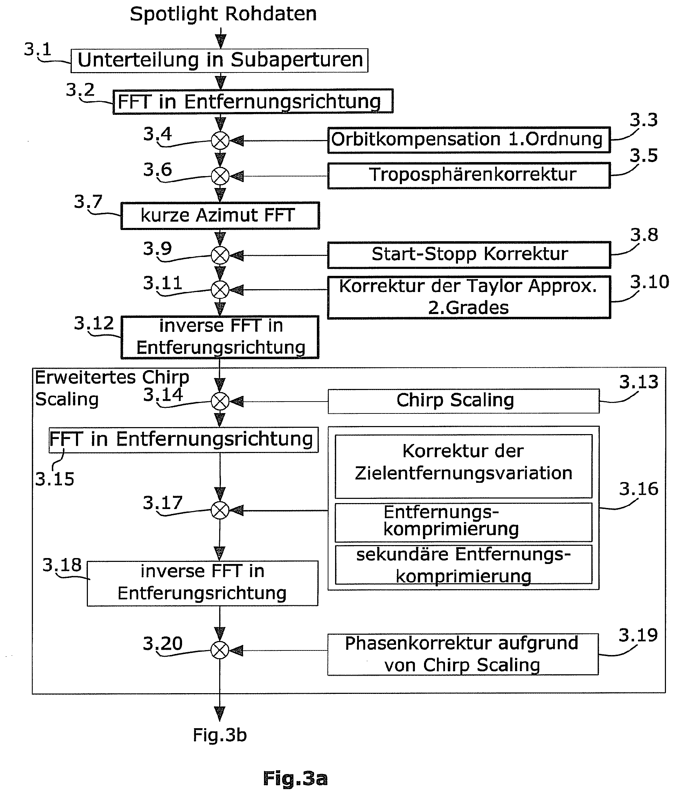

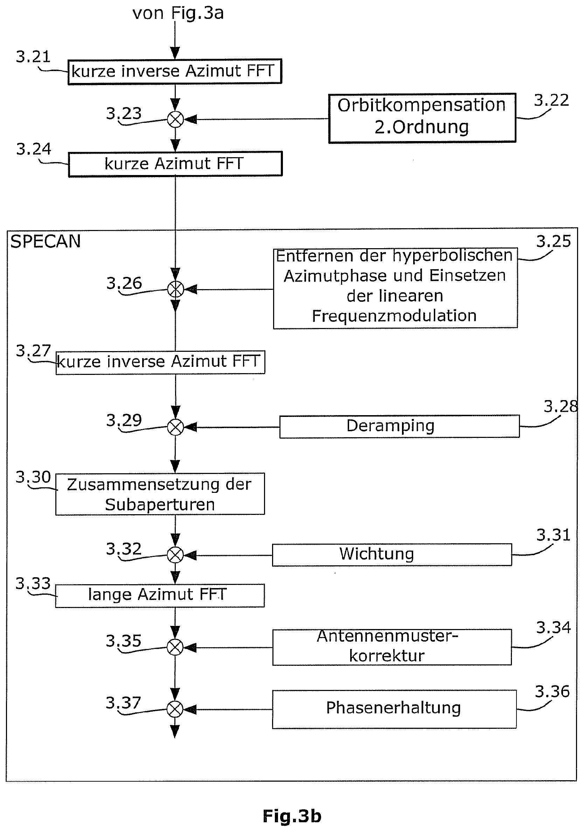

Die Figuren 3a und 3b, auf die nachfolgend durch Fig. 3 verwiesen wird, zeigen in einem schematischen Flussdiagramm die einzelnen Prozedurschritte bei einer bevorzugten Ausführung des Verfahrens nach der vorliegenden Erfindung. In den sich auf Fig. 3 beziehenden Gleichungen ist $t$ der Zeitvektor in der Azimutrichtung (d. h. die "Slow"-Zeit), $\tau$ die Zeit in der auch als Range-Richtung bezeichneten Entfernungsrichtung (d. h. die Echolaufzeit), $f_a$ der Azimutfrequenzvektor (d. h. die Dopplerfrequenz), $f_r$ die Entfernungsfrequenz, $f_0$ die Mittenfrequenz, $r_0$ die Entfernung zu einem Punktziel, $r$ der Entfernungsvektor, $\lambda$ die Wellenlänge, $c$ die Lichtgeschwindigkeit und $j = \sqrt{-1}$ ist die komplexwertige Einheit.

Die Spotlight-Rohdaten werden im Schritt **3.1** zuerst in Subaperturen aufgeteilt, entsprechend US 6,222,933 B1 sowie EP 0 924 534 B1. Während der Verarbeitung muss die Azimutbandbreite $B_a$ eines Punktziels, die von der Antennenstrahlbreite abhängt, ausreichend abgetastet werden. Die gesamte Azimutbandbreite der Szene ist jedoch größer als die maximale augenblickliche Bandbreite $B_a$, weil die Azimutpositionierung eines Ziels einen Frequenz-Offset verursacht. Die augenblickliche Frequenz ist durch Gleichung (21) gegeben:

$$ f_i = K_{rot} \cdot t = -\frac{2 \cdot v^2}{\lambda \cdot r_{rot0}} \cdot t, \quad -\frac{T}{2} \le t \le \frac{T}{2}, \tag{21} $$

wobei $T$ die Beobachtungsdauer und $r_{rot0}$ die Vektorentfernungsdistanz zu dem durch die Geometrie gegebenen Rotationszentrum ist, die im Spotlight-Fall der Mitte der Szene entspricht, wie in Fig. 1 gezeigt. Wenn die Daten verarbeitet werden, sollte die Pulswiederholfrequenz PRF wenigstens so groß wie die gesamte Azimutbandbreite $B_{a,total}$ sein, um mehrdeutige Azimutfrequenzen während der Korrektur der Entfernungsvariation zu verhindern. Mehrdeutige Azimutfrequenzen ergeben einen Auflösungsverlust und eine Verschlechterung des endgültigen, fokussierten Bildes infolge eines Auftretens von "Geisterbildern". Durch die Verwendung der Subapertur-Verarbeitung ist daher eine niedrigere Pulswiederholfrequenz PRF ausreichend. Die Berechnung einer Subapertur-Zeit $T_{sub}$ ist durch Gleichung (22) gegeben:

$$ T_{sub} \le \frac{PRF - B_a}{|K_{rot}|}. \tag{22} $$

Nach der Aufteilung in Subaperturen im Schritt **3.1** wird die Verarbeitung für jede Subapertur i mit dem zugehörigen Dopplerzentroid $f_{DC,i}$ weitergeführt. Um ein schlechtes Verarbeitungsergebnis infolge der Subapertur-Verarbeitung zu verhindern, werden die Subaperturen mit geringer Überlappung gebildet.

Im Folgenden wird unter "kurze Azimut-FFT (Fast-Fourier-Transformation)" bzw. "kurze Azimut-IFFT (Inverse-Fast-Fourier-Transformation)" die durch Anwendung einer Subaperturverarbeitung kurze Länge oder kleine Punktzahl von FFT- bzw. IFFT-Operationen in Azimutrichtung verstanden. Nach dem Zusammenfügen der Subaperturen (wie nachstehend in Verbindung mit Schritt **3.30** behandelt) ist die volle Länge des Zeitsignals wieder hergestellt und die abschließenden FFT-Operationen müssen daher eine "lange Azimut-FFT" bzw. eine "lange Azimut-IFFT" sein.

Im Verarbeitungsschritt **3.2** werden die Daten in den Entfernungsfrequenzbereich über eine FFT in Entfernungsrichtung transformiert. Danach wird die Orbitkompensation erster Ordnung ausgeführt, für die die in Gleichung (23) angegebene Funktion $H_{OCO,1}$ (Block **3.3**) mit dem Signal in einer ersten Multiplikationseinheit **3.4** multipliziert wird:

$$H_{OCO,1}\left(t, f_r; r_{ref}\right) = \exp\left[ j\frac{4\pi}{c} \cdot \left(f_0 + f_r\right) \cdot \Delta r_{residual}\left(t; r_{ref}\right)\right]. \qquad (23)$$

Dabei entspricht $r_{ref}$ der Referenzentfernung und $\Delta r_{residual}(t;r_{ref})$ wird numerisch aus den Orbitdaten und einem Referenzpunkt in der Mitte der Szene wie folgt errechnet:

$$\Delta r_{residual}\left(t; r_{ref}\right) = \left|\vec{p}_{SAT}(t) - \vec{p}_{bc}(t)\right| - \sqrt{r_{ref}^2 - v_{eff,bc}^2(t) \cdot (t - t_0)^2} \; , \qquad (24)$$

wobei $\vec{p}_{SAT}(t)$ die Satellitenposition als Funktion der Zeit in einem erdzentrierten erdfesten Koordinatensystem (ECEF - Earth-centered-Earth-fixed coordinates) und $\vec{p}_{bc}(t)$ die Position des Referenzpunktes in der Mitte der Antennenkeule für jeden Azimutzeitpunkt $t$, ebenfalls in ECEF Koordinaten bezeichnet. $v_{eff,bc}$ ist die effektive Geschwindigkeit für den Referenzpunkt zum Azimutzeitpunkt $t$ und $t_0$ ist die sogenannte zero-Doppler Zeit des Ziels, wobei beide numerisch aus den Statevektoren des Orbits und den Zielkoordinaten errechnet werden. Gl. (23) verschiebt die Einhüllende des Signals und korrigiert auch die Phase um den $\Delta r_{residual}(t;r_{ref})$ entsprechenden Wert. Fig. 4. zeigt ein Beispiel für diese Größe für Daten des TerraSAR-X Sensors und einer Aufzeichnungsdauer entsprechend einer Azimutauflösung von 20cm. Der Fehler ist größer als 300° und würde Defokussierung und Phasenfehler verursachen, falls nicht korrigiert.

Danach erfolgt eine ähnliche Korrektur, um die Variation der Troposphäre innerhalb der synthetischen Apertur auszugleichen, für die die in Gleichung (23) angegebene Funktion $H_{troposphere}$ (Block **3.5**), mit dem Signal in einer weiteren Multiplikationseinheit **3.6** multipliziert wird. Hierfür ist ein Modell für die Verzögerung in der Troposphäre erforderlich. Zweckmäßigerweise wird dasjenige aus [R1] genutzt und erweitert, um der Variation innerhalb der synthetischen Apertur Rechnung zu tragen:

$$\Delta r_{troposphere}\left(t; r_{ref}\right) = \frac{Z \cdot \exp\left[-h\left(r_{ref}\right) \big/ H\right]}{\cos\theta\left(r_{ref}\right)\cos\alpha\left(t; r_{ref}\right)}, \qquad (25)$$

Hierbei ist $Z$ die Verzögerung des Signals im Zenit in Meter, $H$ ist die Troposphärendicke, $h(r_{ref})$ ist die Höhe des Ziels, $\theta$ der Blickwinkel (off-nadir) und $\alpha$ der Azimutwinkel während der synthetischen Apertur, der wiederum numerisch aus den Orbitdaten und dem Referenzpunkt in der Mitte der Antennenkeule zu jedem Azimutzeitpunkt $t$ ermittelt wird. $Z$ und $H$ sind Modellparameter deren Werte mit 2.3 m und 6 km für jeden Punkt auf der Erde relative gut approximiert werden können, wobei aber auch genauere Werte oder andere Modelle genutzt werden können, sofern vorhanden. Der wichtige Parameter ist $\alpha$, der eine zusätzliche, nahezu quadratische Phasenhistorie auf das Signal bewirkt und somit Defokussierung verursacht, falls nicht korrigiert. Sobald die Variation der Verzögerung berechnet wurde, kann diese sowohl bzgl. der Einhüllenden wie auch der Phase ähnlich zu Gl. (23) korrigiert werden:

$$H_{troposphere}\left(t, f_r; r_{ref}\right) = \exp\left[ j\frac{4\pi}{c} \cdot \left(f_0 + f_r\right) \cdot \Delta r_{troposphere}\left(t; r_{ref}\right)\right]. \qquad (26)$$

Aus Effizienzgründen werden die Phasenfunktionen (23) und (26) in einem gemeinsamen Schritt verrechnet.

Danach bringt eine kurze Azimut-FFT die Daten in den zweidimensionalen Frequenzbereich (Block **3.7**), in dem für die Annahme der Start-Stopp-Approximation (Block **3.8**) mittels Gl. (7) und Multiplikationseinheit **3.9** korrigiert wird:

$$H_{ss}\left(f_a, f_r\right) = \exp\left[ j \cdot 2\pi \cdot f_a \cdot \tau_{ss}\left(f_r\right)\right], \qquad (27)$$

wobei $\tau_{ss}$ die entfernungsfrequenzabhängige Azimutverschiebung bezeichnet:

$$\tau_{ss}\left(f_r\right) = \left(f_r + \frac{B_r}{2}\right)\frac{\tau_p}{B_r}, \qquad (28)$$

mit $\tau_p$ gleich der Pulsdauer (Chirp), $B_r$ gleich der Chirpbandbreite und $f_r$ der Entfernungsfrequenzvektor gegeben durch:

$$f_r \in \left[-\frac{f_s}{2}, \frac{f_s}{2}\right], \qquad (29)$$

mit $f_s$ als Abtastfrequenz in Entfernungsrichtung. Für einen "down-chirp" muss der gespiegelte Vektor von (28) genutzt werden, d. h. $\tau_{ss,down\text{-}chirp}(f_r) = \tau_{ss,up\text{-}chirp}(\text{-}f_r)$.

Sofern ein Chirp-Scaling Algorithmus als Prozessierungskern genutzt wird, z. B. ECS wie in diesem Ausführungsbeispiel, muss wegen des Abbruchs der Wurzelfunktion nach dem quadratischen Glied im zweidimensionalen Frequenzbereich eine Restkorrektur (Block 3.10) erfolgen. Die Restkorrektur beschreibt Gleichung (30) und wird mittels Multiplikationseinheit 3.11 realisiert:

$$H_{\Delta ECS}\left(f_a, f_r\right) = \exp\left[j \cdot \phi_{\Delta ECS}\right], \qquad (30)$$

wobei $\phi_{\Delta ECS}$ wie folgt berechnet wird:

$$\phi_{\Delta ECS} = \frac{4\pi}{\lambda} r_{ref} \sqrt{\left(1+\frac{f_r}{f_0}\right)^2 - \left(\frac{\lambda f_a}{2v_{eff}}\right)^2} + \left(\phi_0\left(f_a\right) + \phi_1\left(f_a\right) \cdot f_r + \phi_2\left(f_a\right) \cdot f_r^2\right). \qquad (31)$$

Der zweite Summand in Gleichung (31) entspricht der Taylorreihe bis zum quadratischen Glied in der Entfernungsfrequenz, wie sie zur Ableitung des Chirp Scaling Verfahrens (und implizit auch ECS) genutzt wurde. Die Koeffizienten sind:

$$\phi_0\left(f_a\right) = -\frac{4\pi}{\lambda} r_{ref} \beta\left(f_a\right), \qquad (32)$$

$$\phi_1\left(f_a\right) = -\frac{4\pi}{c} \frac{r_{ref}}{\beta\left(f_a\right)}, \qquad (33)$$

$$\phi_2\left(f_a\right) = -\frac{2\pi}{c^2} \frac{\lambda r_{ref} \cdot \left(\beta^2\left(f_a\right)-1\right)}{\beta^3\left(f_a\right)}, \qquad (34)$$

wobei für den Azimutmodulationsterm gilt:

$$\beta\left(f_a\right) = \sqrt{1 - \left(\frac{\lambda f_a}{2v_{eff}}\right)^2}. \qquad (35)$$

Eine inverse FFT in Entfernungsrichtung (Block 3.12) bringt das Signal in den Entfernungsfrequenzbereich.

Danach wird ein Chirp-Scaling ausgeführt, für das die in Gleichung (38) angegebene Chirp-Scaling-Funktion $H_{cs}(f_a, \tau, r_0)$ (Block 3.13) mit dem Signal in einer ersten Multiplikationseinheit 3.14 multipliziert wird.

Das Chirp-Scaling ergibt eine Anpassung der entfernungsabhängigen Krümmung der Bahn an die Krümmung einer Referenzbahn für eine Referenzentfernung $r_{ref}$, wobei eine Bahn den geometrischen Ort der Phasenzentren aller Entfernungssignale darstellt, die zu einem Punktziel gehören. Die Form der Referenzbahn kann mit $\tau_{a,ref}(f_a)$ in der folgenden Weise beschrieben werden:

$$\tau_{a,ref} = \frac{2 \cdot r_{ref}}{c} \cdot \left( a(f_a) + 1 \right), \tag{36}$$

wobei der lineare Scaling-Faktor $a(f_a)$ die Frequenzabhängigkeit der Entfernungsvariation beschreibt:

$$a(f_a) = \frac{1}{\sqrt{1 - \left( \dfrac{\lambda \cdot f_a}{2 \cdot v_{eff}} \right)^2}} - 1. \tag{37}$$

In der Chirp-Scaling-Funktion $H_{cs}$ ist $K_{eff}$ die Modulationsrate in der Entfernungsrichtung, die von der Azimutfrequenz und der Referenzentfernung abhängig ist, da sie die sekundäre Entfernungskompression einschließt:

$$H_{cs}(f_a, \tau; r_0) = \exp\left[ - j \cdot \pi \cdot K_{eff}(f_a; r_{ref}) \cdot a(f_a) \cdot \left( \tau - \tau_{ref}(f_a) \right) \right]. \tag{38}$$

Nach dem Chirp-Scaling wird eine Entfernungs-FFT (Block **3.15**) zum Transformieren der Daten in den zweidimensionalen Frequenzbereich verwendet, wobei die Entfernungskompression, die Korrektur der Ziel-Entfernungsvariation und die sekundäre Entfernungskompression über eine Multiplikation mit der in Gleichung (39) angegebenen Phasenfunktion $H_{rcmc}(f_a, f_r; r_{ref})$ (Block **3.16**) in einer zweiten Multiplikationseinheit **3.17** ausgeführt werden:

$$H_{rcmc}(f_a, f_r; r_{ref}) = \exp\left[ - j \frac{\pi}{K_{eff}(f_a; r_{ref}) \cdot (1 + a(f_a))} f_r^2 \right] \cdot \exp\left[ j \frac{4 \cdot \pi}{c} \cdot r_{ref} \cdot a(f_a) \cdot f_r \right]. \tag{39}$$

In Gleichung (39) bezeichnet die erste Phasenfunktion die Filterfunktion für die Entfernungskompression. Die zweite Phasenfunktion führt die Korrektur der Ziel-Entfernungsvariation aus. Infolge des mit Gleichung (38) ausgeführten Chirp-Scaling kann diese Korrektur für alle Entfernungen gleichzeitig mittels einer linearen Verschiebung in Entfernungsrichtung bewerkstelligt werden, die nur von der Azimutfrequenz abhängig ist.
Im nächsten Schritt des Prozesses wird eine IFFT in der Entfernung (Block **3.18**) für eine Rücktransformation in den Entfernungs-Doppler-Bereich verwendet. Während des Chirp-Scaling wird in das Signal ein zusätzlicher, entfernungsabhängiger Azimutphasen-Offset eingeführt, der über eine Multiplikation mit einer in Gleichung (40) angegebenen Korrekturfunktion $H_{corr}(f_a; r_0)$ (Block **3.19**) in der Multiplikationseinheit **3.20** entfernt wird:

$$H_{corr}(f_a; r_0) = \exp\left[ j \cdot \pi \cdot K_{eff}(f_a; r_{ref}) \cdot (1 + a(f_a)) \cdot a(f_a) \cdot \left( \frac{2}{c} \cdot (r_0 - r_{ref}) \right)^2 \right]. \tag{40}$$

Im nächsten Schritt des Prozesses wird die Orbitkompensation zweiter Ordnung ausgeführt. Der Schritt beinhaltet eine kurze inverse Azimut-FFT (Block **3.21**) gefolgt von einer Multiplikation mit der Phasenfunktion $H_{OCO,2}$ (Block **3.22**), beschrieben durch Gleichung (41) mittels Multiplikationseinheit **3.23**:

$$H_{OCO,2}(t, \tau) = \exp\left[ j \frac{4\pi}{\lambda} \cdot \left( \Delta r_{residual}(t; r) - \Delta r_{residual}(t; r_{ref}) \right) \right], \tag{41}$$

wobei $\Delta r_{residual}(t; r)$ numerisch berechnet werden muss. Hierfür werden mehrere Referenzziele innerhalb des abgebildeten Streifens ausgewählt, die zwar an der gleichen Azimutposition liegen jedoch an unterschiedlichen Entfernungspositionen. Für jedes Ziel $i$ wird die zugehörige Korrektur $\Delta r_{residual}(t; r_{ref,i})$ berechnet. Um die Korrektur für alle Entfernungen zu ermitteln, genügt eine lineare Interpolation. Eine kurze Azimut FFT (Block **3.24**) bringt das Signal zurück in den Entfernungs-Dopplerbereich.

Im Folgenden wird die Verarbeitung mit der Azimut Scaling und der SPECAN Methode fortgesetzt. Die hyperbolische Phasenhistorie wird durch eine rein quadratische ersetzt, wobei das Signal mit der Phasenfunktion $H_{specan,1}(f_a; r_0)$ (Block **3.25**) aus Gleichung (42) in der Multiplikationseinheit **3.26** verarbeitet wird:

$$H_{specan,1}(f_a; r_0) = \exp\left[ j \cdot \frac{4 \cdot \pi}{\lambda} \cdot r_0 \cdot \big( \beta(f_a) - 1 \big) \right] \cdot \exp\left[ -j \cdot \frac{\pi}{K_{scl}} \cdot f_a^2 \right]. \qquad (42)$$

Die rein-quadratische Phasenhistorie wird durch die Scaling-Dopplerrate $K_{scl}(r)$

$$K_{scl}(r) = -\frac{2 \cdot v_{eff,ref}^2}{\lambda \cdot r_{ref}}, \qquad (43)$$

beschrieben, die der Dopplerrate eines Ziels an der Referenzentfernung $r_{ref}$ entspricht. Da das Azimut Scaling im Zeitbereich in eine Verschiebung von Azimutsignalen, die abseits der Beleuchtungsmitte liegen, verursacht, wird eine kleine Erweiterung der Azimutdimension benötigt. In der Regel wird diese durch die Erweiterung der Subapertur auf die nächste Zweierpotenz gewährleistet. Letzteres wird bevorzugt, da der Rechenaufwand für die FFT/IFFT Schritte minimiert werden soll.

Im nächsten Schritt der Verarbeitung wird eine inverse FFT in Azimutrichtung durchgeführt (Block **3.27**) um die Daten zurück in den Azimut/Enfernungszeitbereich zu wandeln. Danach erfolgt das sogenannte Deramping mittels Funktion $H_{specan,2}(t)$ (Block **3.28**), in Gleichung (44), und Multiplikationsblock **3.29**:

$$H_{specan,2}(t) = \exp\left[ -j \cdot \pi K_{scl} \cdot t^2 \right]. \qquad (44)$$

Im Anschluss werden die einzelnen Subaperturen in Schritt **3.30** zusammengesetzt. Hier wird auch die Gewichtungsfunktion zur Reduzierung der Nebenzipfel in Azimutrichtung (Block **3.31**) mittels Multiplikationseinheit **3.32** angebracht. Nach einer langen Azimut FFT (Block **3.33**) erfolgt die Korrektur des Antennendiagramms (Block **3.34**) mit Multiplikationseinheit **3.35**. Im letzten Schritt müssen die Daten für die Gewährleistung einer phasentreuen Verarbeitung mit der Phasenfunktion $H_{specan,3}(f_a)$ (Block **3.36**) nach Gleichung (45) in Multiplikationseinheit **3.37** verrechnet werden:

$$H_{specan,3}(f_a) = \exp\left[ -j \cdot \pi \cdot \frac{f_a^2}{K_{scl}} \right]. \qquad (45)$$

Das vorgeschlagene Verfahren erlaubt die effiziente Prozessierung hochaufgelöster weltraumgestützter Spotlight Daten.

Die obige Beschreibung des bevorzugten Ausführungsbeispiels beschreibt vollständig den generellen Gedanken der Erfindung, so dass Dritte, unter Anwendung des aktuellen Kenntnistandes, existierende Spotlight SAR Prozessierungsalgorithmen ändern und/oder anpassen können, ohne dafür experimentieren und vom generischen Konzept abweichen zu müssen. Derartige Anpassungen und Änderungen sind im Sinne des aufgeführten bevorzugten Ausführungsbeispiels zu verstehen. Die Art und Methoden zur Realisierung der ausgeführten Funktionalität kann eine Vielzahl von alternativen Umsetzungsformen annehmen, ohne deswegen vom Gedanken der Erfindung abzuweichen.

## 6. Beschreibung der Ergebnisse eines Ausführungsbeispiels

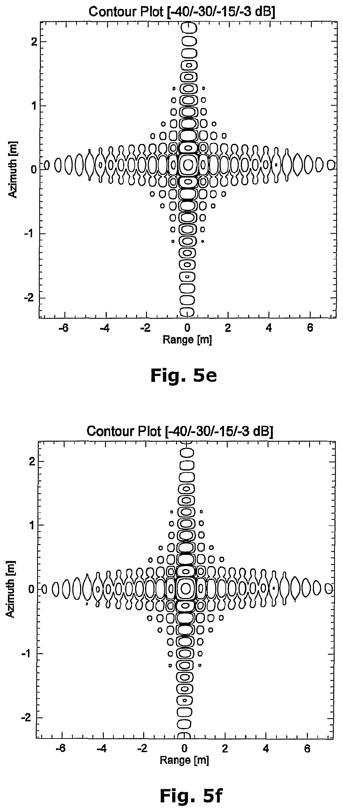

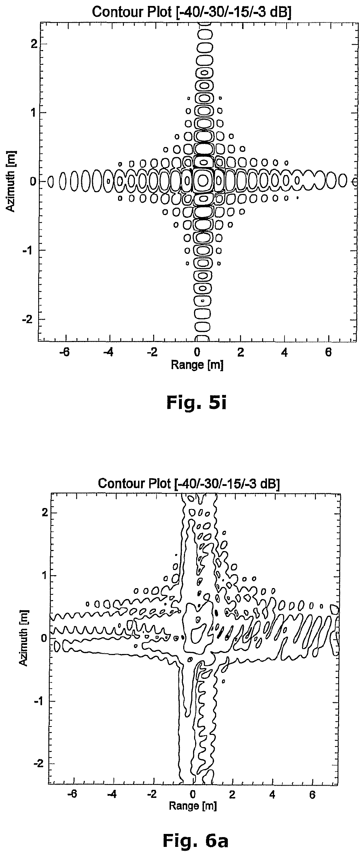

Die Figuren 5a bis 5i (nachfolgend durch Fig. 5 abgekürzt) zeigen das Ergebnis der Verarbeitung nach der Methode der Erfindung für neun simulierte Ziele. Da keine Gewichtungsfunktionen während der Verarbeitung genutzt wurden, entsprechen die Konturlinien der Darstellung in Fig. 5 zweidimensionalen Sinc-Funktionen (sinc x = sin x/x). Die neun Punktziele haben unterschiedliche Entfernungs- und Azimutpositionen innerhalb einer Szenegröße. Die Anordnung der Ziele entspricht den Eckpositionen einer Szene der Größe 3000mx8000m in Azimut und Entfernung. Die simulierte Geometrie ist entsprechend eines weltraumgestützten Szenarios, wobei die Start-Stopp-Approximation angenommen und der Einfluss der Troposphäre nicht simuliert wurde. Deswegen validiert diese Simulation die Kompensation der Orbitkrümmung **(3.3, 3.4)** und die Korrektur der Approximation für das Chirp Scaling **(3.10, 3.11).** Die gewählte Referenzentfernung für das Scaling lag bei 620994.46 m. Die theoretische geometrische Auflösung ist 0.16mx0.44m in Azimut- und Entfernungsrichtung. Die maximalen Abweichungen der gemessenen Auflösung von den theoretischen Werten sind 2% in Azimut und 2% in Entfernung.

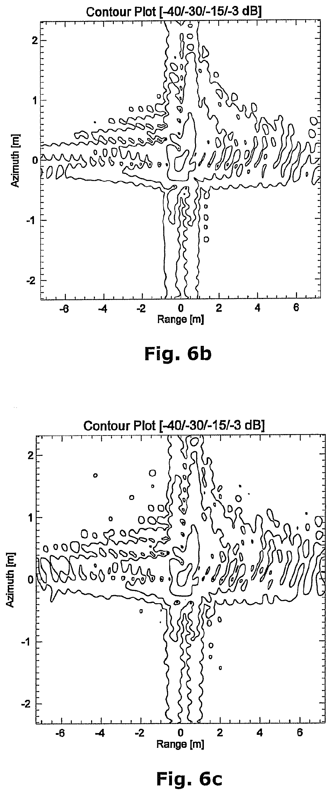

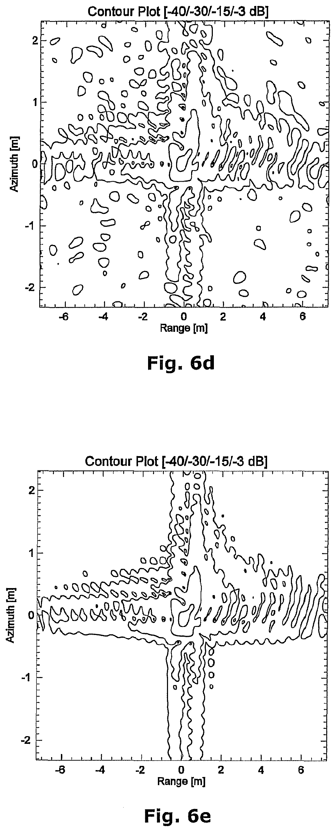

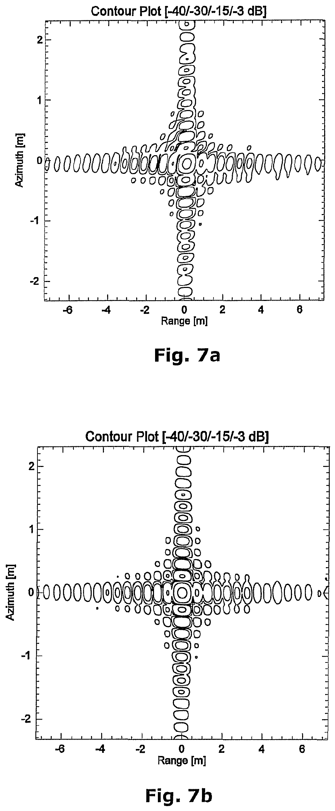

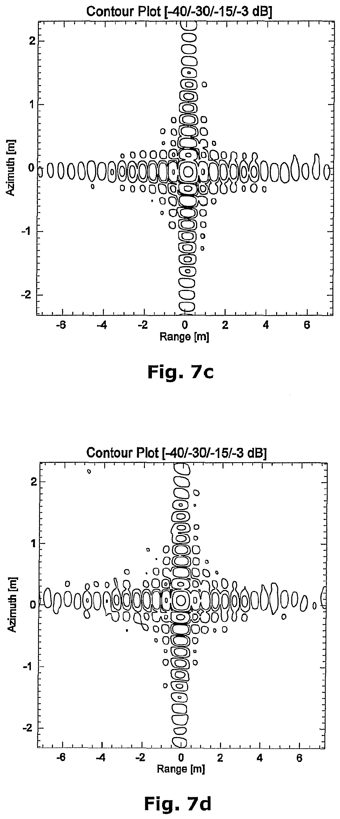

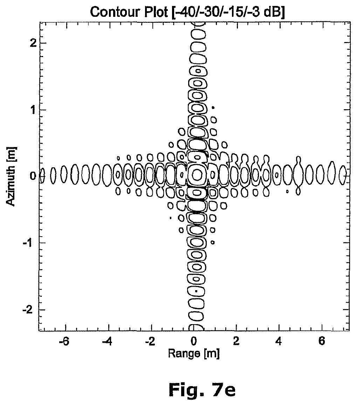

Figuren 6a bis 6e zeigen das Ergebnis der Verarbeitung von fünf Reflektoren eines realen SAR Bildes aufgezeichnet vom TerraSAR-X Satelliten über Oberpfaffenhofen, Deutschland. Die Methode nach der Erfindung wurde hierfür nicht genutzt, so dass weder der gekrümmte Orbit, noch die Start-Stopp-Approximation und der Effekt der Troposphäre richtig berücksichtigt wurden. Das konventionelle Chirp-Scaling Verfahren, wie in [R3] beschrieben, wurde hierzu genutzt. Vier Reflektoren liegen in der Mitte und ein fünfter am Rand der Szene, die eine Ausdehnung von 3500mx8800m in Azimut und Entfernung aufweist. Die theoretisch möglichen geometrischen Auflösungen sind 0.16mx0.44 m in Azimut und Entfernungsdimension. Die maximalen Abweichungen der gemessenen Werte von den theoretischen sind 50% in Azimut und 20% in Entfernung. Die Figuren 7a bis 7e zeigen das Ergebnis nach der Verarbeitung mit der Methode der Erfindung. Die maximalen Abweichungen der gemessenen Auflösung von den theoretischen Werten sind jetzt 2% in Azimut und 2% in Entfernung, womit alle Schritte der Erfindung validiert sind.

**7. Literaturstellen**

[R1] H. Breit, T. Fritz, U. Balss, M. Lachaise, A. Niedermeier, M. Vonavka, "TerraSAR-X SAR processing and products," IEEE Transactions on Geoscience and Remote Sensing, vol. 48, no. 2, pp. 727-740, Feb. 2010.

[R2] D. D'Aria, A.Monti Guarnieri, "High-Resolution Spaceborne SAR Focusing by SVD-Stolt", IEEE Geoscience and Remote Sensing Letters, vol. 4, no. 4, pp. 639-643, Oct. 2007.

[R3] H. Shin, J. Lim, "Omega-K algorithm for spaceborne Spotlight SAR imaging," IEEE Geoscience and Remote Sensing Letters, vol. 9, no. 3, pp. 343-347, May 2012.

[R4] A. Ribalta, "Time-domain reconstruction algorithms for FMCW-SAR," IEEE Geoscience and Remote Sensing Letters, vol. 8, no. 3, pp. 396-400, May 2011.

[R5] A. Ribalta, "High resolution SAR image reconstruction: the generalized backprojection algorithm," in Proc. IEEE Geoscience and Remote Sensing Symposium (IGARSS), Vancouver, Canada, Jul. 2011.

**Patentansprüche**

1. Verfahren zur Verarbeitung von hochauflösenden zweidimensionalen Spotlight-SAR-Rohdaten eines abgebildeten, von einem SAR-Sensor überflogenen Gebiets, wobei der SAR-Sensor einen Sender, eine Antenne und einen Empfänger aufweist und die von dem SAR-Sensor ausgesendeten und nach Reflektion aus dem Gebiet empfangenen Rohdaten als frequenzmodulierte Radarpulse gewonnen worden sind, **gekennzeichnet durch**

   - eine im Frequenzbereich erfolgende Verarbeitung der SAR-Rohdaten unter Anpassung der Phasenhistorie des Azimutsignals an einen hyperbolischen Verlauf unter Berücksichtigung

   - einer Funktion zur geometrischen Korrektur einer im Wesentlichen in der Mitte des abgebildeten Gebiets und in Bewegungsrichtung des SAR-Sensors verlaufenden Linie unter numerischer Einbeziehung des real gemessenen Orbitverlaufs und unter Verwendung einer azimutabhängigen Phasenkorrektur und
   - einer Funktion zur Korrektur von innerhalb der Beleuchtungszeit variablen Laufzeiteffekten in der Troposphäre unter Verwendung einer ebenfalls azimutabhängigen Phasenkorrektur.

2. Verfahren nach Anspruch 1, **gekennzeichnet durch** eine Kompensation der während des Sendens und des Empfangs der frequenzmodulierten Radarpulse erfolgenden, relativen Bewegung des SAR-Sensors zum Ziel.

3. Verfahren nach Anspruch 1 oder 2, **gekennzeichnet durch** die Verwendung eines Chirp-Scaling basierten Verfahrens mit einer Taylor-Approximation 2-ten Grades, wobei eine Kompensation der Taylor-Approximation 2-ten Grades 2D-Frequenzspektrums eines Referenzpunktziels erfolgt.

4. Verfahren nach einem der Ansprüche 1 bis 3, **gekennzeichnet durch** eine Erweiterung des Gültigkeitsbereichs der geometrischen Korrektur der Linie in im Wesentlichen der Mitte des abgebildeten Gebiets auf das gesamte abgebildete Gebiet **durch** eine zusätzliche geometrische und/oder signallaufzeitbedingte Kompensation.

5. Verfahren nach Anspruch 2, **gekennzeichnet durch** folgende sequentiell auszuführenden Schritte:

Transformieren von im Zeitbereich vorliegenden, in Subaperturen aufgeteilten SAR-Rohdaten in den Entfernungsfrequenzbereich mittels FFT in Entfernungsrichtung,
wobei die Funktion zur geometrischen Korrektur der im Wesentlichen in der Mitte des abgebildeten Gebiets und in Bewegungsrichtung des SAR-Sensors verlaufenden Linie unter numerischer Einbeziehung des real gemessenen Orbitverlaufs und unter Verwendung einer azimutabhängigen Phasenkorrektur das Multiplizieren der zweidimensionalen SAR-Rohdaten mit einer Phasenfunktion $H_{OCO,1}(t,f_r;r_{ref})$, die **durch**

$$H_{OCO,1}\left(t,f_r;r_{ref}\right) = \exp\left[j\frac{4\pi}{c}\cdot\left(f_0+f_r\right)\cdot\Delta r_{residual}\left(t;r_{ref}\right)\right], \qquad (46)$$

gegeben ist, umfasst, wobei $t$ die Azimutzeit, $c$ die Lichtgeschwindigkeit, $f_r$ den Entfernungsfrequenzvektor, $f_0$ die Mittenfrequenz und $\Delta r_{residual}(t;r_{ref})$ die Differenz zwischen tatsächlicher Entfernungshistorie und deren hyperbolischer Approximation für eine Referenzentfernung, $r_{ref}$, bezeichnen, letztere beschrieben **durch**

$$\Delta r_{residual}\left(t;r_{ref}\right) = \left|\vec{p}_{SAT}(t)-\vec{p}_{bc}(t)\right| - \sqrt{r_{ref}^2 - v_{eff,bc}^2(t)\cdot\left(t-t_0\right)^2}, \qquad (1)$$

wobei $\bar{p}_{SAT}(t)$ *die* Satellitenposition als Funktion der Zeit in einem erdzentrierten, erdfesten Koordinatensystem bezeichnet und $\bar{p}_{bc}(t)$ die Position des Referenzpunktes in im Wesentlichen der Mitte des von der Antenne beleuchteten Gebiets für jeden Azimutzeitpunkt t in erdzentrierten, erdfesten Koordinaten, $v_{eff,bc}$ die effektive Geschwindigkeit für den Referenzpunkt zum Azimutzeitpunkt $t$ und $t_0$ die sogenannte zero-Dopplerzeit des Ziels ist, wobei $v_{eff,bc}$ und $t_0$ numerisch aus den Statevektoren des gemessenen Orbitverlaufs und den Zielkoordinaten eines Referenzpunktes im abgebildeten Gebiet errechnet werden,
wobei die Funktion zur Korrektur von innerhalb der Beleuchtungszeit variablen Laufzeiteffekten in der Troposphäre unter Verwendung einer ebenfalls azimutabhängigen Phasenkorrektur das Multiplizieren der zweidimensionalen Daten mit einer Phasenfunktion $H_{troposphere}(t,f_r;r_{ref})$, die **durch**

$$H_{troposphere}\left(t,f_r;r_{ref}\right) = \exp\left[j\frac{4\pi}{c}\cdot\left(f_0+f_r\right)\cdot\Delta r_{troposphere}\left(t;r_{ref}\right)\right], \qquad (48)$$

gegeben ist, umfasst, wobei $\Delta r_{troposphere}(t;r_{ref})$ eine azimutabhängige, **durch** die Troposphäre verursachte Verzögerung des Signals im Ausbreitungspfad bezeichnet, die näherungsweise mit

$$\Delta r_{troposphere}\left(t;r_{ref}\right) = \frac{Z\cdot\exp\left[-h\left(r_{ref}\right)\big/H\right]}{\cos\theta\left(r_{ref}\right)\cos\alpha\left(t;r_{ref}\right)}, \qquad (49)$$

berechnet werden kann, wobei Z die Verzögerung des Signals im Zenit in Meter, $H$ die Troposphärendicke, $h(r_{ref})$ die Höhe des Ziels, $\theta$ den Blickwinkel (off-nadir) und $\alpha$ den sich während der synthetischen Apertur ändernden Azimutwinkel bezeichnen, der wiederum numerisch aus den Orbitdaten und dem Referenzpunkt in der Mitte des von der Antenne beleuchteten Gebiets zu jedem Azimutzeitpunkt $t$ ermittelt wird, und Z und $H$ Modellparameter sind, deren Werte z. B. mit 2.3 m und 6 km für jeden Punkt auf der Erde relativ gut approximiert werden können, wobei aber auch genauere Werte oder andere Modelle genutzt werden können; und
Transformieren der Subaperturdaten mittels kurzer Azimut FFTs in den zweidimensionalen Frequenzbereich, wobei die eine Kompensation der während des Sendens und des Empfangs der frequenzmodulierten Radarpulse erfolgenden, relativen Bewegung des SAR-Sensors zum Ziel das Multiplizieren der zweidimensionalen Daten mit einer Phasenfunktion $H_{ss}(f_a,f_r)$, die **durch**

$$H_{ss}\left(f_a, f_r\right) = \exp\left[j \cdot 2\pi \cdot f_a \cdot \tau_{ss}\left(f_r\right)\right], \qquad (50)$$

gegeben ist, umfasst, wobei $\tau_{ss}$ die entfernungsfrequenzabhängige Azimutverschiebung bezeichnet:

$$\tau_{ss}\left(f_r\right) = \left(f_r + \frac{B_r}{2}\right)\frac{\tau_p}{B_r}, \qquad (51)$$

mit $\tau_p$ als Radarpulsdauer (Chirpdauer), $B_r$ als Chirpbandbreite und $f_r$ als Entfernungsfrequenzvektor, der gegeben ist **durch**:

$$f_r \in \left[-\frac{f_s}{2}, \frac{f_s}{2}\right], \qquad (52)$$

mit $f_s$ als Abtastfrequenz in Entfernungsrichtung, wobei bei einem "down-chirp" für $\tau_{ss}$ gilt

$$\tau_{ss,down-chirp}\left(f_r\right) = \tau_{ss,up-chirp}\left(-f_r\right),$$

und
Transformieren der Subaperturdaten in den Zeitbereich mittels einer inversen zweidimensionalen FFT.

6. Verfahren nach Anspruch 3, **gekennzeichnet durch** die folgenden Schritte für die Kompensation der Taylor-Approximation, und zwar im Falle der Verwendung eines Prozessierungskerns basierend auf Chirp Scaling (z. B. Extended Chirp Scaling ECS) für die entfernungsvariante Verarbeitung:

Transformieren der Subaperturdaten in den zweidimensionalen Frequenzbereich mittels einer zweidimensionalen FFT,
Multiplizieren der zweidimensionalen Daten mit einer Phasenfunktion $H_{\Delta ECS}(f_a,f_r)$ gegeben **durch**

$$H_{\Delta ECS}\left(f_a, f_r\right) = \exp\left[j \cdot \phi_{\Delta ECS}\right], \qquad (53)$$

mit

$$\phi_{\Delta ECS} = \frac{4\pi}{\lambda}r_{ref}\sqrt{\left(1+\frac{f_r}{f_0}\right)^2 - \left(\frac{\lambda f_a}{2v_{eff}}\right)^2} + \left(\phi_0\left(f_a\right) + \phi_1\left(f_a\right)\cdot f_r + \phi_2\left(f_a\right)\cdot f_r^2\right), \qquad (54)$$

wobei $\lambda$ die Wellenlänge und $v_{eff}$ die unter Berücksichtigung der Erdrotation effektive Geschwindigkeit zwischen SAR-Sensor und Referenzpunkt bezeichnen, und der zweite Summand in Gleichung (54) der Taylorreihe des Signals bis zum quadratischen Glied in der Entfernungsfrequenz entspricht, wie sie zur Ableitung des Chirp Scaling Verfahrens (und implizit auch ECS) genutzt wurde, und zwar mit den folgenden Koeffizienten:

$$\phi_0\left(f_a\right) = -\frac{4\pi}{\lambda}r_{ref}\beta\left(f_a\right), \qquad (55)$$

$$\phi_1(f_a) = -\frac{4\pi}{c}\frac{r_{ref}}{\beta(f_a)}, \qquad (56)$$

$$\phi_2(f_a) = -\frac{2\pi}{c^2}\frac{\lambda r_{ref}\cdot\left(\beta^2(f_a)-1\right)}{\beta^3(f_a)}, \qquad (57)$$

wobei $r_{ref}$ die Entfernung zum Referenzpunkt ist und für den Azimutmodulationsterm gilt:

$$\beta(f_a) = \sqrt{1-\left(\frac{\lambda f_a}{2v_{eff}}\right)^2}\ ; \qquad (58)$$

und
Transformieren der Subaperturdaten in den Zeitbereich mittels einer inversen zweidimensionalen FFT.

**7.** Verfahren nach einem der vorhergehenden Ansprüche unter Einbeziehung des Anspruchs 4, **gekennzeichnet durch** die folgenden Schritte, und zwar sofern die Verarbeitung der SAR-Rohdaten im Frequenzbereich bis auf eine Fokussierung in Azimutrichtung bereits erfolgt ist:

Transformieren der in Subaperturen aufgeteilten SAR-Rohdaten zurück in den Azimutzeitbereich mittels inverser Azimut-FFT;
Multiplizieren der zweidimensionalen Daten mit einer Phasenfunktion $H_{OCO,2}(t,\tau)$ gegeben **durch**

$$H_{OCO,2}(t,\tau) = \exp\left[j\frac{4\pi}{\lambda}\cdot\left(\Delta r_{residual}(t;r)-\Delta r_{residual}(t;r_{ref})\right)\right], \qquad (59)$$

wobei $\Delta r_{residual}(t;r)$ numerisch für jede Entfernung berechnet werden muss, und
Transformieren der Subaperturdaten zurück in den Azimutfrequenzbereich mittels kurzer Azimut-FFT.

**8.** Verfahren nach einem der vorhergehenden Ansprüche unter Einbeziehung des Anspruchs 3, **gekennzeichnet durch** die folgenden sequentiell durchzuführenden Schritte, und zwar unter der Voraussetzung der zusätzlichen Verwendung einer SPECAN Methode:

Aufteilung der Spotlight SAR Rohdaten in Azimut-Subaperturen;
Transformieren der Subaperturdaten in den Azimutfrequenzbereich mittels kurzer Azimut-FFT;
Multiplizieren des Signals mit der Chirp Scaling Funktion $H_{cs}$, gegeben **durch**

$$H_{cs}(f_a,\tau;r_{ref}) = \exp\left[-j\cdot\pi\cdot K_{eff}(f_a;r_{ref})\cdot a(f_a)\cdot\left(\tau-\tau_{ref}(f_a)\right)^2\right], \qquad (60)$$

wobei $\tau$ die Entfernungszeit, $\tau_{ref}$ die Entfernungszeit für den Referenzpunkt, $a(f_a)$ der lineare Skalierungsfaktor, und $K_{eff}(f_a;r_{ref})$ die Modulationsrate in der Entfernungsrichtung für den Referenzpunkt bezeichnen;
Transformieren des Signals in den zweidimensionalen Frequenzbereich mittels FFT in Entfernungsrichtung;
zum Zwecke der Korrektur sowohl der Entfernungsvariation als auch der Entfernungskompression als auch der Entfernungskompression zweiter Ordnung erfolgendes Multiplizieren des Signals mit der Phasenfunktion $H_{rcmc}$ gegeben **durch**

$$H_{rmc}\left(f_a, f_r; r_{ref}\right) = \exp\left[-j\frac{\pi}{K_{eff}\left(f_a; r_{ref}\right)\cdot\left(1+a\left(f_a\right)\right)}f_r^2\right]\cdot\exp\left[j\frac{4\cdot\pi}{c}\cdot r_{ref}\cdot a\left(f_a\right)\cdot f_r\right] \quad (61)$$

Transformieren des Signals in den Entfernungszeit-Azimutfrequenzbereich mittels inverser FFT in Entfernungsrichtung;
Multiplizieren des Signals mit einer Phasenkorrekturfunktion $H_{corr}$ gegeben durch

$$H_{corr}\left(f_a; r\right) = \exp\left[j\cdot\pi\cdot K_{eff}\left(f_a; r_{ref}\right)\cdot\left(1+a\left(f_a\right)\right)\cdot a\left(f_a\right)\cdot\left(\frac{2}{c}\cdot\left(r-r_{ref}\right)\right)^2\right], \quad (62)$$

wobei r die Entfernungsvektor ist;
Multiplizieren der zweidimensionalen Daten mit einer Phasenfunktion $H_{specan,1}(f_a; r)$ gegeben **durch**

$$H_{specan,1}\left(f_a; r\right) = \exp\left[j\cdot\frac{4\cdot\pi}{\lambda}\cdot r\cdot\left(\beta\left(f_a\right)-1\right)\right]\cdot\exp\left[-j\cdot\frac{\pi}{K_{scl}}\cdot f_a^2\right], \quad (63)$$

wobei $K_{scl}$ der Azimutskalierungsfaktor ist;
Transformieren der Subaperturdaten in den Azimutzeitbereich mittels kurzer inverser Azimut-FFT;
Multiplizieren der zweidimensionalen Daten mit einer Phasenfunktion $H_{specan,2}(f_a; r_0)$ gegeben **durch**

$$H_{specan,2}\left(t\right) = \exp\left[-j\cdot\pi K_{scl}\cdot t^2\right]; \quad (64)$$

Zusammensetzen der Subaperturen zur vollen Azimutgröße;
Multiplizieren der zweidimensionalen Daten mit einer Funktion zur Nebenzipfelunterdrückung in Azimutrichtung;
Transformieren der zweidimensionalen Daten in den Frequenzbereich mittels langer Azimut-FFT;
Multiplizieren der zweidimensionalen Daten mit einer Funktion zur Korrektur des Azimutantennendiagramms; und
Multiplizieren der zweidimensionalen Daten mit einer Phasenfunktion $H_{specan,3}(f_a)$ gegeben **durch**

$$H_{specan,3}\left(f_a\right) = \exp\left[-j\cdot\pi\cdot\frac{f_a^2}{K_{scl}}\right]. \quad (65)$$

**9.** Verwendung des Verfahrens nach einem der Ansprüche 5 bis 7 für die zweidimensionale Verarbeitung weltraumgestützter SAR Rohdaten in den Aufzeichnungsmodi Stripmap, ScanSAR und TOPS.

**Claims**

**1.** A method for processing high-resolution two-dimensional spotlight SAR raw data of an imaged area overflown by a SAR sensor, wherein the SAR sensor comprises a transmitter, an antenna and a receiver, and the raw data transmitted by the SAR sensor and received by the SAR sensor after reflection from the area have been obtained as frequency-modulated radar pulses, **characterized by**

- processing the SAR raw data performed in the frequency range, with adaptation of the phase history of the azimuth signal to an hyperbolic development under consideration of

- a function for geometric correction of a line extending substantially in the center of the imaged area and in the moving direction of the SAR sensor, with numerical inclusion of the actually measured orbit curvature and with use of an azimuth-dependent phase correction, and
- a function for correction of run-time effects in the troposphere that are variable within the illumination time, by use of a likewise azimuth-dependent phase correction.

2. The method according to claim 1, **characterized by** compensation of the relative movement of the SAR sensor to the target occurring during transmission and reception of the frequency-modulated radar pulses.

3. The method according to claim 1 or 2, **characterized by** use of a chirp-scaling-based method with 2nd degree Taylor approximation, there being performed a compensation of the 2nd degree Taylor approximation of the 2D frequency spectrum of a reference point target.

4. The method according to any one of claims 1 to 3, **characterized by** an enlargement of the validity range of the geometric correction of said line substantially in the center of the imaged area, so as to cause said validity range to encompass the entire imaged area, by use of an additional geometric and/or signal-run-time-based compensation.

5. The method according to claim 2, **characterized by** the following steps to be performed sequentially:

transformation of SAR raw data which are present in the time range and are subdivided into subapertures, into the range frequency domain by means of FFT in the range direction,
wherein the function for geometric correction of said line extending substantially in the center of the imaged area and in the moving direction of the SAR sensor with numerical inclusion of the actually measured orbit curvature and with use of an azimuth-dependent phase correction comprises the multiplying of the two-dimensional SAR raw data by a phase function $H_{OCO,1}(t,f_r;r_{ref})$ which is given by

$$H_{OCO,1}\left(t, f_r; r_{ref}\right) = \exp\left[ j\frac{4\pi}{c} \cdot \left(f_0 + f_r\right) \cdot \Delta r_{residual}\left(t; r_{ref}\right)\right], \qquad (46)$$

wherein $t$ denotes the azimuth time, $c$ denotes the speed of light, $f_r$ denotes the range speed vector, $f_0$ denotes the center frequency and $\Delta r_{residual}(t;r_{ref})$ denotes the difference between the real range history and its hyperbolic approximation for a reference range $r_{ref}$, the latter described by

$$\Delta r_{residual}\left(t; r_{ref}\right) = \left| \vec{p}_{SAT}(t) - \vec{p}_{bc}(t) \right| - \sqrt{r_{ref}^2 - v_{eff,bc}^2\left(t\right) \cdot \left(t - t_0\right)^2}, \qquad (1)$$

wherein $\vec{p}_{SAT}(t)$ denotes the satellite position as a function of time in an earth-centered, earth-fixed coordinate system and $\vec{p}_{bc}(t)$ denotes the position of the reference point substantially in the center of the area illuminated by the antenna for each azimuth time point $t$ in earth-centered, earth-fixed coordinates, $v_{eff,bc}$ denotes the effective speed for the reference point at the azimuth time point $t$, and $t_0$ denotes the so-called zero Doppler time of the target, wherein $v_{eff,bc}$ and $t_0$ are numerically computed from the state vectors of the measured orbit curvature and the target coordinates of a reference point in the imaged area,
wherein said function for correction of run-time effects in the troposphere that are variable within the illumination time by use of a likewise azimuth-dependent phase correction comprises the multiplying of the two-dimensional data by a phase function $H_{troposphere}(t,f_r;r_{ref})$ which is given by

$$H_{troposphere}\left(t, f_r; r_{ref}\right) = \exp\left[ j\frac{4\pi}{c} \cdot \left(f_0 + f_r\right) \cdot \Delta r_{troposphere}\left(t; r_{ref}\right)\right], \qquad (48)$$

wherein $\Delta r_{troposphere}(t;r_{ref})$ denotes an azimuth-dependent delay of the signal in the propagation path that is caused by the troposphere, which delay can be approximately computed by

$$\Delta r_{troposphere}\left(t;r_{ref}\right) = \frac{Z \cdot \exp\left[-h\left(r_{ref}\right)\Big/ H\right]}{\cos\theta\left(r_{ref}\right)\cos\alpha\left(t;r_{ref}\right)}, \qquad (49)$$

wherein $Z$ denotes the delay of the signal in the zenith in meters, $H$ denotes the troposphere thickness, $h(r_{ref})$ denotes the altitude of the target, $\theta$ denotes the view angle (off-nadir), and $\alpha$ denotes the azimuth angle varying during the synthetic aperture that is in turn numerically detected, for each azimuth time point $t$, from the orbit data and the reference point in the center of the area illuminated by the antenna, and $Z$ und $H$ denote model parameters whose values can be approximated relatively well for each point on the earth, e.g. with 2.3 m and 6 km, wherein, however, also more precise values or other models can be used; and

transforming the subaperture data by means of short azimuth FFTs into the two-dimensional frequency range, wherein one compensation of the relative movement of the SAR sensor to the target occurring during transmission and reception of the frequency-modulated radar pulses comprises the multiplying of the two-dimensional data by a phase function $H_{ss}(f_a,f_r)$ which is given by

$$H_{ss}\left(f_a,f_r\right) = \exp\left[j \cdot 2\pi \cdot f_a \cdot \tau_{ss}\left(f_r\right)\right], \qquad (50)$$

wherein $\tau_{ss}$ denotes the range-frequency-dependent azimuth migration:

$$\tau_{ss}\left(f_r\right) = \left(f_r + \frac{B_r}{2}\right)\frac{\tau_p}{B_r}, \qquad (51)$$

with $\tau_p$ as the radar pulse duration (chirp duration), $B_r$ as the chirp band width and $f_r$ as the range frequency vector which is given by:

$$f_r \in \left[-\frac{f_s}{2}, \frac{f_s}{2}\right], \qquad (52)$$

with $f_s$ as the sampling frequency in the range direction, wherein, in a "down chirp", there applies for $\tau_{ss}$:

$$\tau_{ss,down-chirp}\left(f_r\right) = \tau_{ss,up-chirp}\left(-f_r\right),$$

and
transforming the subaperture data into the time domain by means of an inverse two-dimensional FFT.

6.  The method according to claim 3, **characterized by** the following steps for compensation of the Taylor approximation, namely in case of using a processing core on the basis of chirp scaling (e.g. Extended Chirp Scaling ECS) for the range-variant processing:

    transforming the subaperture data into the two-dimensional frequency range by means of a two-dimensional FFT, multiplying the two-dimensional data by a phase function $H_{\Delta ECS}(f_a,f_r)$ given by

$$H_{\Delta ECS}\left(f_a,f_r\right) = \exp\left[j \cdot \phi_{\Delta ECS}\right], \qquad (53)$$

    with

$$\phi_{\Delta ECS} = \frac{4\pi}{\lambda} r_{ref} \sqrt{\left(1+\frac{f_r}{f_0}\right)^2 - \left(\frac{\lambda f_a}{2v_{eff}}\right)^2} + \left(\phi_0\left(f_a\right) + \phi_1\left(f_a\right)\cdot f_r + \phi_2\left(f_a\right)\cdot f_r^2\right), \quad (54)$$

wherein $\lambda$ denotes the wavelength and $v_{eff}$ denotes the effective speed between the SAR sensor and the reference point under consideration of the rotation of the earth, and the second summand in equation (54) corresponds the Taylor series of the signal up to the quadratic member in the range frequency, said Taylor series being the one that has been used for derivation of the chirp scaling method (and implicitly also the ECS), namely with the following coefficients:

$$\phi_0\left(f_a\right) = -\frac{4\pi}{\lambda} r_{ref} \beta\left(f_a\right), \quad (55)$$

$$\phi_1\left(f_a\right) = -\frac{4\pi}{c} \frac{r_{ref}}{\beta\left(f_a\right)}, \quad (56)$$

$$\phi_2\left(f_a\right) = -\frac{2\pi}{c^2} \frac{\lambda r_{ref}\cdot\left(\beta^2\left(f_a\right)-1\right)}{\beta^3\left(f_a\right)}, \quad (57)$$

wherein $r_{ref}$ denotes the distance to the reference point, and, for the azimuth modulation term, there applies:

$$\beta\left(f_a\right) = \sqrt{1-\left(\frac{\lambda f_a}{2v_{eff}}\right)^2}; \quad (58)$$

and
transforming the subaperture data into the time domain by means of an inverse two-dimensional FFT.

7. The method according to any one of the preceding claims under inclusion of claim 4, **characterized by** the following steps, namely in as far as the processing of the SAR raw data in the frequency range has already been performed except for focusing in the azimuth direction:

transforming the SAR raw data subdivided into subapertures back into the azimuth time domain by means of inverse azimuth FFT;
multiplying the two-dimensional data by a phase function $H_{OCO,2}(t,\tau)$ given by

$$H_{OCO,2}\left(t,\tau\right) = \exp\left[j\frac{4\pi}{\lambda}\cdot\left(\Delta r_{residual}\left(t;r\right) - \Delta r_{residual}\left(t;r_{ref}\right)\right)\right], \quad (59)$$

wherein $\Delta r_{residual}(t;r)$ has to be numerically computed for each range, and
transforming the subaperture data back into the azimuth frequency domain by means of short azimuth FFT.

8. The method according to any one of the preceding claims under inclusion of claim 3, **characterized by** the following steps to be performed sequentially, namely under the precondition of additionally using a SPECAN method:

subdividing the spotlight SAR raw data into azimuth subapertures;
transforming the subaperture data into the azimuth frequency domain by means of short azimuth FFT;
multiplying the signal by the chirp scaling funktion $H_{cs}$, given by

$$H_{cs}\left(f_a,\tau;r_{ref}\right)=\exp\left[-j\cdot\pi\cdot K_{eff}\left(f_a;r_{ref}\right)\cdot a\left(f_a\right)\cdot\left(\tau-\tau_{ref}\left(f_a\right)\right)^2\right], \qquad (60)$$

wherein $\tau$ denotes the range time, $\tau_{ref}$ denotes the range time for the reference point, $a(f_a)$ denotes the linear scaling factor, and $K_{eff}(f_a;r_{ref})$ denotes the modulation rate in the range direction for the reference point; transforming the signal into the two-dimensional frequency range by means of FFT in the range direction; for the purpose of correction of both the range variation and the range compression as well as the range compression of the second order, performing a multiplication of the signal by the phase function $H_{rcmc}$ given by

$$H_{rcmc}\left(f_a,f_r;r_{ref}\right)=\exp\left[-j\frac{\pi}{K_{eff}\left(f_a;r_{ref}\right)\cdot\left(1+a\left(f_a\right)\right)}f_r^2\right]\cdot\exp\left[j\frac{4\cdot\pi}{c}\cdot r_{ref}\cdot a\left(f_a\right)\cdot f_r\right] \qquad (61)$$

transforming the signal into the range-time azimuth frequency domain by means of inverse FFT in the range direction;
multiplying the signal by a phase correction function $H_{corr}$ given by

$$H_{corr}\left(f_a;r\right)=\exp\left[j\cdot\pi\cdot K_{eff}\left(f_a;r_{ref}\right)\cdot\left(1+a\left(f_a\right)\right)\cdot a\left(f_a\right)\cdot\left(\frac{2}{c}\cdot\left(r-r_{ref}\right)\right)^2\right], \qquad (62)$$

wherein $r$ denotes the space vector;
multiplying the two-dimensional data by a phase function $H_{specan,1}(f_a;r)$ given by

$$H_{specan,1}(f_a;r)=\exp\left[j\cdot\frac{4\cdot\pi}{\lambda}\cdot r\cdot\left(\beta\left(f_a\right)-1\right)\right]\cdot\exp\left[-j\cdot\frac{\pi}{K_{scl}}\cdot f_a^2\right], \qquad (63)$$

wherein $K_{scl}$ denotes the azimuth scaling factor;
transforming the subaperture data into the azimuth time domain by means of short inverse azimuth FFT;
multiplying the two-dimensional data by a phase function $H_{specan,2}(f_a;r_0)$ given by

$$H_{specan,2}(t)=\exp\left[-j\cdot\pi K_{scl}\cdot t^2\right]; \qquad (64)$$

assembling the subapertures to the full azimuth size;
multiplying the two-dimensional data by a function for side lobe suppression in the azimuth direction;
transforming the two-dimensional data into the frequency domain by means of long azimuth FFT;
multiplying the two-dimensional data by a function for correction of the azimuth antenna diagram; and
multiplying the two-dimensional data by a phase function $H_{specan,3}(f_a)$ given by

$$H_{specan,3}\left(f_a\right)=\exp\left[-j\cdot\pi\cdot\frac{f_a^2}{K_{scl}}\right]. \qquad (65)$$

9. Use of the method according to any one of claims 5 to 7 for the two-dimensional processing of spaceborne SAR raw data in the recording modes Stripmap, ScanSAR und TOPS.

**Revendications**

1. Procédé pour le traitement de données brutes Spotlight-SAR bidimensionnelles à haute résolution d'une zone visualisée survolée par un capteur SAR (Radar à synthèse d'ouverture) dans lequel le capteur SAR comporte un émetteur, une antenne et un récepteur et les données brutes émises par le capteur SAR et reçue depuis la zone après réflexion sont obtenues comme impulsions radar modulées en fréquence, **caractérisé par**

- un traitement des données brutes SAR se faisant en plage de fréquences par adaptation de l'historique de phase du signal d'azimut à une courbe hyperbolique en prenant en compte

- une fonction de correction géométrique d'une ligne essentiellement au centre de la zone observée et suivant la direction du mouvement du capteur SAR avec intégration numérique du parcours orbital en termes réels et appliquant une correction de phase dépendante de l'azimut et
- une fonction de correction des effets liés au temps de propagation de variables dans la troposphère dans le temps d'illumination en appliquant une correction de phase dépendante également de l'azimut.

2. Procédé selon la revendication 1, **caractérisé par** une compensation du mouvement relatif du capteur SAR à la cible, se faisant pendant l'envoi et la réception de la pulsation radar modulée en fréquence.

3. Procédé selon l'une des revendications 1 ou 2, **caractérisé par** l'application d'un procédé basé sur le chirp-scaling doté d'une approximation de Taylor du second degré, dans lequel une compensation de l'approximation de Taylor du second degré du spectre des fréquences 2D d'un point de référence est réalisée

4. Procédé selon l'une des revendications 1 à 3, **caractérisé par** un élargissement de la plage de validité de la correction géométrique de la ligne essentiellement au milieu de la zone visualisée à la totalité de la zone visualisée au moyen d'une compensation supplémentaire géométrique et/ou conditionnelle au temps de propagation du signal.

5. Procédé selon la revendication 2, **caractérisé par** les étapes suivantes se déroulant de façon séquentielle :

transformation des données brutes SAR présentes dans un intervalle de temps et divisées en sous-ouvertures en plage de fréquences de portée au moyen d'une FFT dans la direction de portée, dans laquelle la fonction de correction géométrique de la ligne essentiellement au centre de la zone observée et suivant la direction du mouvement du capteur SAR avec intégration numérique du parcours orbital en termes réels et appliquant une correction de phase dépendante de l'azimut comporte la multiplication des données brutes SAR bidimensionnelles avec une fonction de phase $H_{OCO,1}(t,f_r;r_{ref})$, laquelle est obtenue par

$$H_{OCO,1}\left(t,f_r;r_{ref}\right) = \exp\left[j\frac{4\pi}{c}\cdot\left(f_0+f_r\right)\cdot\Delta r_{residual}\left(t;r_{ref}\right)\right], \qquad (46)$$

dans laquelle t désigne le temps d'azimut, c la vitesse de la lumière, $f_r$ le vecteur de fréquence de portée, $f_0$ la fréquence centrale et $\Delta r_{residual}(t;r_{ref})$ la différence entre l'historique de portée réel et son approximation hyperbolique pour une portée de référence $r_{ref}$, ce dernier décrit par

$$\Delta r_{residual}\left(t;r_{ref}\right) = \left|\vec{p}_{SAT}(t) - \vec{p}_{bc}(t)\right| - \sqrt{r_{ref}^2 - v_{eff,bc}^2(t)\cdot\left(t-t_0\right)^2}, \qquad (1)$$

dans laquelle $\overline{p_{SAT}}(t)$ désigne la position du satellite comme fonction du temps dans un système de coordonnées terrestres géocentriques et $\bar{p}_{bc}(t)$ est la position du point de référence essentiellement au centre de la zone illuminée par l'antenne pour chaque point de temps d'azimut $t$ en coordonnées terrestres géocentriques, $v_{eff,bc}$ la vitesse effective pour le point de référence au point de temps d'azimut t et $t_0$ le temps Doppler zéro de la cible, dans lequel $v_{eff,bc}$ et $t_0$ sont calculés numériquement à partir des vecteurs d'état des orbites mesurées et des coordonnées de destination d'un point de référence dans la zone visualisée, dans laquelle la fonction de correction des effets liés au temps de propagation de variables dans la troposphère dans le temps d'illumination appliquant une correction de phase dépendante également de l'azimut comporte la multiplication des données bidimensionnelles avec une fonction de phase $H_{troposphere}(t,f_r;r_{ref})$, laquelle est obtenue par

$$H_{troposphere}\left(t,f_r;r_{ref}\right) = \exp\left[ j\frac{4\pi}{c} \cdot \left(f_0 + f_r\right) \cdot \Delta r_{troposphere}\left(t;r_{ref}\right) \right], \qquad (48)$$

dans laquelle $\Delta r_{troposphere}(t;r_{ref})$ désigne un décalage du signal dépendant de l'azimut, causé par la troposphère, dans le trajet de propagation, pouvant être approximativement calculé par

$$\Delta r_{troposphere}\left(t;r_{ref}\right) = \frac{Z \cdot \exp\left[ {-h\left(r_{ref}\right)}/{H} \right]}{\cos\theta\left(r_{ref}\right)\cos\alpha\left(t;r_{ref}\right)}, \qquad (49)$$

dans lequel $Z$ désigne le décalage du signal au zénith en mètres, $H$ est l'épaisseur de la troposphère, $h(r_{ref})$ est l'altitude de la cible, $\theta$ l'angle d'émission (off-nadir) et $\alpha$ l'angle azimutal se modifiant pendant la synthèse d'ouverture, lequel est à son tour déterminé numériquement à partir des données d'orbite et du point de référence au centre de la zone illuminée par l'antenne à chaque point de temps d'azimut $t$, et Z et H sont des paramètres de modèle, dont les valeurs peuvent être bien approximées pour chaque point sur la Terre, p. ex. avec 2,3 m et 6 km, dans lequel des valeurs plus exactes ou d'autres modèles peuvent être utilisés ; et

Transformation des données de sous-ouverture au moyen d'une FFT d'azimut court dans l'intervalle de fréquence bidimensionnel, dans laquelle une compensation du mouvement relatif du capteur SAR, ayant lieu pendant l'émission et la réception de l'impulsion radar modulée en fréquence vers la cible, comporte la multiplication des données bidimensionnelles avec

une fonction de phase $H_{ss}(f_a,f_r)$, laquelle est obtenue par

$$H_{ss}\left(f_a,f_r\right) = \exp\left[ j \cdot 2\pi \cdot f_a \cdot \tau_{ss}\left(f_r\right) \right], \qquad (50)$$

dans laquelle $\tau_{ss}$ désigne le déplacement d'azimut dépendant de la fréquence de portée :

$$\tau_{ss}\left(f_r\right) = \left(f_r + \frac{B_r}{2}\right)\frac{\tau_p}{B_r}, \qquad (51)$$

avec $\tau_p$ en tant que durée d'impulsion radar (durée de chirp), $B_r$ en tant que largeur de bande de chirp et $f_r$ en tant que vecteur de fréquence de portée qui est obtenu par :

$$f_r \in \left[ -\frac{f_s}{2}, \frac{f_s}{2} \right], \qquad (52)$$

avec $f_s$ en tant que fréquence de balayage dans la direction de portée dans lequel la relation suivante pour $\tau_{ss}$ est vraie lors d'un « down-chirp » :

$$\tau_{ss,down-chirp}\left(f_r\right) = \tau_{ss,up-chirp}\left(-f_r\right),$$

et

transformation des données de sous-ouverture dans l'intervalle de temps au moyen d'une FFT inverse bidimensionnelle.

6. Procédé selon la revendication 3, **caractérisé par** les étapes suivantes pour la compensation de l'approximation de Taylor, à savoir en cas d'application d'un noyau de traitement basé sur le chirp scaling (p. ex. Extended Chirp Scaling ECS) pour le traitement à portée variable :

transformation des données de sous-ouverture dans l'intervalle de fréquence bidimensionnel au moyen d'une FFT bidimensionnelle,
multiplication des données bidimensionnelles avec une fonction de phase $H_{\Delta ECS}(f_a, f_r)$ obtenue par

$$H_{\Delta ECS}(f_a, f_r) = \exp\left[ j \cdot \phi_{\Delta ECS} \right],\tag{53}$$

avec

$$\phi_{\Delta ECS} = \frac{4\pi}{\lambda} r_{ref} \sqrt{\left(1 + \frac{f_r}{f_0}\right)^2 - \left(\frac{\lambda f_a}{2v_{eff}}\right)^2} + \left(\phi_0(f_a) + \phi_1(f_a) \cdot f_r + \phi_2(f_a) \cdot f_r^2\right),\tag{54}$$

dans laquelle $\lambda$ désigne la longueur d'onde et $V_{eff}$ la vitesse effective, prenant en compte la rotation terrestre, entre le capteur SAR et le point de référence, et le second terme dans l'équation (54) de la série de Taylor du signal comprend jusqu'à l'élément quadratique dans la fréquence de portée, telle qu'elle est utilisée pour dériver le procédé de chirp scaling (et, implicitement, également l'ECS), à savoir avec les coefficients suivants :

$$\phi_0(f_a) = -\frac{4\pi}{\lambda} r_{ref} \beta(f_a),\tag{55}$$

$$\phi_1(f_a) = -\frac{4\pi}{c} \frac{r_{ref}}{\beta(f_a)},\tag{56}$$

$$\phi_2(f_a) = -\frac{2\pi}{c^2} \frac{\lambda r_{ref} \cdot \left(\beta^2(f_a) - 1\right)}{\beta^3(f_a)},\tag{57}$$

dans laquelle $r_{ref}$ est la portée par rapport au point de référence et ce qui suit vaut pour le terme de modulation d'azimut :

$$\beta(f_a) = \sqrt{1 - \left(\frac{\lambda f_a}{2v_{eff}}\right)^2};\tag{58}$$

et transformation des données de sous-ouverture dans l'intervalle de temps au moyen d'une FFT inverse bidimensionnelle.

7. Procédé selon l'une des revendications précédentes intégrant la revendication 4, **caractérisé par** les étapes suivantes, à savoir pour autant que le traitement des données SAR a déjà lieu dans l'intervalle de fréquences jusqu'à une mise au point dans la direction de l'azimut :

transformation des données brutes SAR réparties dans les sous-ouvertures vers l'intervalle de temps d'azimut au moyen d'une FFT azimutale inverse ;
multiplication des données bidimensionnelles avec une fonction de phase $H_{OCO,2}(t,r)$ obtenue par

$$H_{OCO,2}(t,\tau) = \exp\left[ j \frac{4\pi}{\lambda} \cdot \left(\Delta r_{residual}(t;r) - \Delta r_{residual}(t;r_{ref})\right)\right],\tag{59}$$

dans laquelle $\Delta r_{residual}(t;r)$ doit être calculé numériquement pour chaque portée et

transformation des données de sous-ouverture vers l'intervalle de temps d'azimut au moyen d'une FFT azimutale courte.

8. Procédé selon l'une des revendications précédentes intégrant la revendication 3, **caractérisé par** les étapes suivantes se déroulant de façon séquentielle, à savoir à condition qu'une méthode SPECAN soit appliquée en plus :

répartition des données brutes SAR Spotlight dans les sous-ouvertures azimutales ;
transformation des données de sous-ouverture vers l'intervalle de temps d'azimut au moyen d'une FFT azimutale courte ;
multiplication des signaux avec la fonction Chirp Scaling $H_{cs}$, obtenue par

$$H_{cs}\left(f_a,\tau;r_{ref}\right) = \exp\left[-j \cdot \pi \cdot K_{eff}\left(f_a;r_{ref}\right) \cdot a\left(f_a\right) \cdot \left(\tau - \tau_{ref}\left(f_a\right)\right)^2\right], \qquad (60)$$

dans laquelle $\tau$ désigne le temps de portée, $\tau_{ref}$ le temps de portée pour le point de référence, $a(f_a)$ le facteur d'échelle linéaire et $K_{eff}(f_a;r_{ref})$ le taux de modulation dans la direction de portée pour le point de référence ;
transformation du signal dans l'intervalle de fréquence bidimensionnel au moyen d'une FFT dans la direction de portée ;
afin de corriger aussi bien la variation de portée que la compression de portée de second ordre, multiplication du signal avec la fonction de phase $H_{rcmc}$ obtenue par :

$$H_{rcmc}\left(f_a,f_r;r_{ref}\right) = \exp\left[-j\frac{\pi}{K_{eff}\left(f_a;r_{ref}\right)\cdot\left(1+a\left(f_a\right)\right)}f_r^2\right] \cdot \exp\left[j\frac{4\cdot\pi}{c}\cdot r_{ref}\cdot a\left(f_a\right)\cdot f_r\right] \quad (61)$$

transformation du signal dans l'intervalle de fréquence azimutale de temps de portée au moyen d'une FFT inverse dans la direction de portée ;
multiplication du signal avec une fonction de correction de phase $H_{corr}$ obtenue par :

$$H_{corr}\left(f_a;r\right) = \exp\left[j \cdot \pi \cdot K_{eff}\left(f_a;r_{ref}\right)\cdot\left(1+a\left(f_a\right)\right)\cdot a\left(f_a\right)\cdot\left(\frac{2}{c}\cdot\left(r-r_{ref}\right)\right)^2\right], \qquad (62)$$

dans laquelle $r$ est le vecteur de portée ;
multiplication des données bidimensionnelles avec une fonction de phase $H_{specan,1}(f_a;r)$ obtenue par

$$H_{specan,1}(f_a;r) = \exp\left[j\cdot\frac{4\cdot\pi}{\lambda}\cdot r\cdot\left(\beta\left(f_a\right)-1\right)\right]\cdot\exp\left[-j\cdot\frac{\pi}{K_{scl}}\cdot f_a^2\right], \qquad (63)$$

dans laquelle $K_{scl}$ est le facteur d'échelle de l'azimut ;
transformation des données de sous-ouverture vers l'intervalle de temps d'azimut au moyen d'une FFT azimutale inverse courte ;
multiplication des données bidimensionnelles avec une fonction de phase $H_{specan,2}(f_a;r_0)$ obtenue par

$$H_{specan,2}(t) = \exp\left[-j\cdot\pi K_{scl}\cdot t^2\right]; \qquad (64)$$

composition des sous-ouvertures en azimut total ;
multiplication des données bidimensionnelles avec une fonction de suppression du lobe latéral dans la direction de l'azimut ;
transformation des données bidimensionnelles vers l'intervalle de fréquence au moyen d'une FFT azimutale longue ;
multiplication des données bidimensionnelles avec une fonction de correction du diagramme d'antenne d'azimut ; et
multiplication des données bidimensionnelles avec une fonction de phase $H_{specan,3}(f_a)$ obtenue par

$$H_{specan,3}\left(f_a\right) = \exp\left[-j \cdot \pi \cdot \frac{f_a^2}{K_{sci}}\right]. \qquad (65)$$

**9.** Application du procédé selon l'une des revendications 5 à 7 pour le traitement bidimensionnel des données brutes SAR spatiales dans les modes d'affichage Stripmap, ScanSAR et TOPS.

**Fig. 1**

**Fig. 2**

EP 2 875 384 B1

Spotlight Rohdaten

3.1 — Unterteilung in Subaperturen

3.2 — FFT in Entfernungsrichtung

3.4 — ⊗ ← Orbitkompensation 1.Ordnung — 3.3

3.6 — ⊗ ← Troposphärenkorrektur — 3.5

3.7 — kurze Azimut FFT

3.9 — ⊗ ← Start-Stopp Korrektur — 3.8

3.11 — ⊗ ← Korrektur der Taylor Approx. 2.Grades — 3.10

3.12 — inverse FFT in Entferungsrichtung

Erweitertes Chirp Scaling

3.14 — ⊗ ← Chirp Scaling — 3.13

FFT in Entfernungsrichtung
3.15

3.17 — ⊗ ← | Korrektur der Zielentfernungsvariation / Entfernungs-komprimierung / sekundäre Entfernungs-komprimierung | — 3.16

3.18 — inverse FFT in Entferungsrichtung

3.20 — ⊗ ← Phasenkorrektur aufgrund von Chirp Scaling — 3.19

Fig.3b

**Fig.3a**

30

von Fig.3a

3.21 — kurze inverse Azimut FFT

3.23 — ⊗ ← Orbitkompensation 2.Ordnung   3.22

3.24 — kurze Azimut FFT

SPECAN

3.25 — Entfernen der hyperbolischen Azimutphase und Einsetzen der linearen Frequenzmodulation

3.26 — ⊗

3.27 — kurze inverse Azimut FFT

3.29 — ⊗ ← Deramping   3.28

3.30 — Zusammensetzung der Subaperturen

3.32 — ⊗ ← Wichtung   3.31

3.33 — lange Azimut FFT

3.35 — ⊗ ← Antennenmuster-korrektur   3.34

3.37 — ⊗ ← Phasenerhaltung   3.36

**Fig.3b**

**Fig. 4**

Contour Plot [-40/-30/-15/-3 dB]

**Fig. 5a**

Contour Plot [-40/-30/-15/-3 dB]

**Fig.5b**

Contour Plot [-40/-30/-15/-3 dB]

**Fig. 5c**

Contour Plot [-40/-30/-15/-3 dB]

**Fig. 5d**

Contour Plot [-40/-30/-15/-3 dB]

**Fig. 5e**

Contour Plot [-40/-30/-15/-3 dB]

**Fig. 5f**

Contour Plot [-40/-30/-15/-3 dB]

**Fig. 5g**

Contour Plot [-40/-30/-15/-3 dB]

**Fig. 5h**

Contour Plot [-40/-30/-15/-3 dB]

**Fig. 5i**

Contour Plot [-40/-30/-15/-3 dB]

**Fig. 6a**

**Fig. 6b**

**Fig. 6c**

Contour Plot [-40/-30/-15/-3 dB]

**Fig. 6d**

Contour Plot [-40/-30/-15/-3 dB]

**Fig. 6e**

Contour Plot [-40/-30/-15/-3 dB]

**Fig. 7a**

Contour Plot [-40/-30/-15/-3 dB]

**Fig. 7b**

Contour Plot [-40/-30/-15/-3 dB]

Fig. 7c

Contour Plot [-40/-30/-15/-3 dB]

Fig. 7d

Contour Plot [-40/-30/-15/-3 dB]

Fig. 7e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0795762 B
- US 6222933 B
- EP 0924534 B
- EP 2167989 B

- US 6222933 B1
- EP 0924534 B1
- EP 0795762 B1


**In der Beschreibung aufgeführte Nicht-Patentliteratur**

- **H. BREIT ; T. FRITZ ; U. BALSS ; M. LACHAISE ; A. NIEDERMEIER ; M. VONAVKA.** TerraSAR-X SAR processing and products. *IEEE Transactions on Geoscience and Remote Sensing,* Februar 2010, vol. 48 (2), 727-740
- **D. D'ARIA ; A.MONTI GUARNIERI.** High-Resolution Spaceborne SAR Focusing by SVD-Stolt. *IEEE Geoscience and Remote Sensing Letters,* Oktober 2007, vol. 4 (4), 639-643

- **H. SHIN ; J. LIM.** Omega-K algorithm for spaceborne Spotlight SAR imaging. *IEEE Geoscience and Remote Sensing Letters,* Mai 2012, vol. 9 (3), 343-347
- **A. RIBALTA.** Time-domain reconstruction algorithms for FMCW-SAR. *IEEE Geoscience and Remote Sensing Letters,* Mai 2011, vol. 8 (3), 396-400
- **A. RIBALTA.** High resolution SAR image reconstruction: the generalized backprojection algorithm. *Proc. IEEE Geoscience and Remote Sensing Symposium (IGARSS),* Juli 2011